# EUROPEAN PATENT SPECIFICATION

(11) **EP 4 480 203 B1**
(45) Date of publication and mention of the grant of the patent: **28.01.2026**
(21) Application number: 23703571.2
(22) Date of filing: 03.02.2023
(51) Int. Cl.: H04W 12/06, H04L 9/40, H04W 12/069

(54) **NEGOTIATION MECHANISMS FOR AKMA AND GBA**
VERHANDLUNGSMECHANISMEN FÜR AKMA UND GBA
MÉCANISMES DE NÉGOCIATION POUR AKMA ET GBA

(30) Priority: 14.02.2022 WO PCT/CN2022/076186
(43) Date of publication of application: 25.12.2024
(73) Proprietor: Telefonaktiebolaget LM Ericsson (publ), 164 83 Stockholm (SE)
(72) Inventor: CASTELLANOS ZAMORA, David, 28026 MADRID (ES); TSIATSIS, Vlasios, 112 15 STOCKHOLM (SE); WANG, Cheng, SHANGHAI 200335 (CN); WIFVESSON, Monica, 226 52 LUND (SE); KARAKOC, Ferhat, 34912 ISTANBUL (TR)
(74) Representative: LifeTech IP Spies & Behrndt Patentanwälte PartG mbB
(86) International application number: PCT/EP2023/052719
(87) International publication number: WO 2023/152054

(56) References cited:
- WO-A1-2021/167417
- "3rd Generation Partnership Project; Technical Specification Group Services and System Aspects; Study on Security Aspects of Enhancement of Support for Edge Computing in 5GC (Release 17)", 15 March 2021 (2021-03-15), XP051987240, Retrieved from the Internet <URL:https://ftp.3gpp.org/tsg_sa/WG3_Security/TSGS3_102Bis-e/Docs/S3-211321.zip S3-211321_TR_33839-050_cl.docx> [retrieved on 20210315]

## Description

### TECHNICAL FIELD

The present disclosure relates generally to the field of communication networks, and more specifically to "edge computing" techniques that facilitate execution environments proximate to users and/or devices that provide and consume data, rather than in centralized, public network clouds.

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

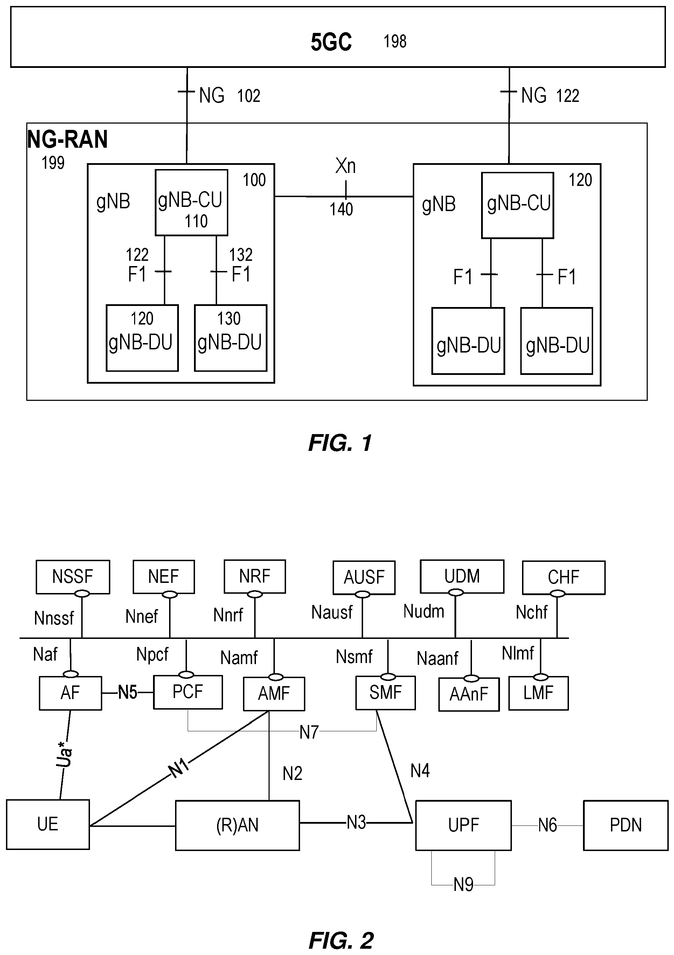

Figure 1 illustrates a high-level view of an exemplary 5G network architecture, consisting of a Next Generation RAN (NG-RAN) 199 and a 5G Core (5GC) 198. NG-RAN 199 can include one or more gNodeB's (gNBs) connected to the 5GC via one or more NG interfaces, such as gNBs 100, 150 connected via interfaces 102, 152, respectively. More specifically, gNBs 100, 150 can be connected to one or more Access and Mobility Management Functions (AMFs) in the 5GC 198 via respective NG-C interfaces. Similarly, gNBs 100, 150 can be connected to one or more User Plane Functions (UPFs) in 5GC 198 via respective NG-U interfaces. Various other network functions (NFs) can be included in the 5GC 198, as described in more detail below.

In addition, the gNBs can be connected to each other via one or more Xn interfaces, such as Xn interface 140 between gNBs 100 and 150. The radio technology for the NG-RAN is often referred to as "New Radio" (NR). With respect the NR interface to UEs, each of the gNBs can support frequency division duplexing (FDD), time division duplexing (TDD), or a combination thereof. Each of the gNBs can serve a geographic coverage area including one or more cells and, in some cases, can also use various directional beams to provide coverage in the respective cells.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region", with the term "AMF" being described in more detail below.

The NG RAN logical nodes shown in Figure 1 include a Central Unit (CU or gNB-CU) and one or more Distributed Units (DU or gNB-DU). For example, gNB 100 includes gNB-CU 110 and gNB-DUs 120 and 130. CUs (*e.g.,* gNB-CU 110) are logical nodes that host higher-layer protocols and perform various gNB functions such controlling the operation of DUs. A DU (*e.g.,* gNB-DUs 120, 130) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (*e.g.,* for communication), and power supply circuitry.

A gNB-CU connects to one or more gNB-DUs over respective F1 logical interfaces, such as interfaces 122 and 132 shown in Figure 1. However, a gNB-DU can be connected to only a single gNB-CU. The gNB-CU and connected gNB-DU(s) are only visible to other gNBs and the 5GC as a gNB. In other words, the F1 interface is not visible beyond gNB-CU.

Another change in 5G networks (e.g., in 5GC) is that traditional peer-to-peer interfaces and protocols found in earlier-generation networks are modified and/or replaced by a Service Based Architecture (SBA) in which Network Functions (NFs) provide one or more services to one or more service consumers. This can be done, for example, by Hyper Text Transfer Protocol/Representational State Transfer (HTTP/REST) application programming interfaces (APIs). In general, the various services are self-contained functionalities that can be changed and modified in an isolated manner without affecting other services. This SBA model also adopts principles like modularity, reusability, and self-containment of NFs, which can enable deployments to take advantage of the latest virtualization and software technologies.

Furthermore, the services are composed of various "service operations", which are more granular divisions of the overall service functionality. The interactions between service consumers and producers can be of the type "request/response" or "subscribe/notify". In the 5G SBA, network repository functions (NRF) allow every network function to discover the services offered by other network functions, and Data Storage Functions (DSF) allow every network function to store its context.

3GPP Rel-16 introduced a feature called authentication and key management for applications (AKMA) that is based on 3GPP user credentials in 5G, including the Internet of Things (IoT) use case. More specifically, AKMA leverages the user's AKA (Authentication and Key Agreement) credentials to bootstrap security between the UE and an application function (AF), which allows the UE to securely exchange data with an application server. The AKMA architecture can be considered an evolution of GBA (Generic Bootstrapping Architecture) specified for 5GC in 3GPP Rel-15 and is further specified in 3GPP TS 33.535 (v16.0.0).

It is expected that 5GC will support edge computing (EC), which enables operator and third-party services to be hosted close to a UE's access point of attachment. This can facilitate efficient service delivery through the reduced end-to-end latency and load on the transport network. The 5GC can select a user plane function (UPF) close to the UE and execute the traffic steering from the UPF to the local Data Network via an N6 interface. Both UPF and N6 are discussed in more detail below.

3GPP TR 23.748 (v17.0.0) discusses architectural enhancements that may be needed to support EC in 5GC for 3GPP Rel-17. In addition, 3GPP TR 33.839 (v17.0.0) discusses a study on security aspects of enhancement of support for EC in 5GC for 3GPP Rel-17. Key issues discussed in 3GPP TR 33.839 include authentication, authorization, and transport security solutions for interfaces between clients and servers and for interfaces between different servers in an Edge data network. These servers can include Edge Configuration Servers (ECS), Edge Enabler Servers (EES), and Edge Application Servers (EAS). Relevant clients include Edge Enabler Client (EEC), which can be regarded an application that runs on the UE and communicates with the ECS and EES.

This 3GPP report TR 33.839 V0.5.0 examines security enhancements for edge computing in 5G networks by identifying key issues such as authentication and authorization between various edge functions (EEC, ECS, EES), transport security requirements for newly defined interfaces (EDGE-1 to EDGE-9), and privacy aspects related to user credentials. It proposes a set of potential security requirements and outlines a range of solutions, from leveraging existing mechanisms like secondary authentication or AKMA-based methods to introducing new procedures for securing communication among the involved entities, thereby aiming to ensure robust protection and authorized access in edge environments.

Document WO 2021167417 A1 describes a system in which a device seeks to obtain multi-access edge computing services by relying on existing 3GPP-based credentials for authentication and authorization. The method involves an edge configuration server (ECS) that verifies a code produced by the device using network-derived keys, then issues tokens or credentials that allow the device to register with an edge enabler server (EES). Once registration is complete, the device can discover and connect to an edge application server (EAS) providing the desired service; the server side checks the supplied tokens or keys against an anchor function or equivalent entity that holds or validates the network access credentials. This approach ensures that only a device with valid carrier-established security parameters can access the edge services, using token-based or key-based verifications at each step to confirm authenticity.

### SUMMARY

Current solutions for EEC authentication have various difficulties, issues, and/or drawbacks. For example, both AKMA and GBA are (or will be) specified for use in authentication of EEC by the EES/ECS, so there needs to be a negotiation mechanism that involves EEC, EES, ECS, UE, and the UE's Home Public Land Mobile Network (HPLMN). However, current negotiation mechanisms do not enable an application server (e.g., EES or ECS) to determine the UE's HPLMN and whether the HPLMN supports AKMA, GBA, or both.

Accordingly, embodiments of the present disclosure address these and other problems, issues, and/or difficulties related to security, thereby enabling the otherwise-advantageous deployment of EC solutions in relation to a 5G network.

Some embodiments of the present disclosure include methods (e.g., procedures) for a UE configured with a client (e.g., EEC) for an edge data network (e.g., 5G network).

These exemplary methods can include sending, to a server in the edge data network, a first message that includes one of the following contents:
- at least one pre-shared key (PSK) identity hint that is supported by the UE and the UE's HPLMN, and one or more security key identifiers corresponding to respective one or more of a plurality of authentication procedures supported by at least the HPLMN;
- an indication of the UE's HPLMN;
- all valid PSK identity hints, and the one or more security key identifiers; or
- all valid PSK identity hints, and the indication of the HPLMN.

These exemplary methods can also include receiving from the server a second message that includes one of the following contents: all valid PSK identity hints; or a PSK identity hint that is supported by at least the UE's HPLMN.

In some embodiments, the client is an EEC and the server is an ECS or an EES. In some embodiments, the plurality of authentication procedures can include GBA and AKMA. In some embodiments, the security identifiers include one or more of the following: a Bootstrapping Transaction Identifier (B-TID) associated with GBA, and an AKMA key identifier (A-KID) associated with AKMA.

In some embodiments, the valid PSK identity hints include the following: an 3GPP AKMA identity hint associated with AKMA; and a 3GPP bootstrapping identity hint, a 3GPP bootstrapping uicc hint and/or a 3GPP bootstrapping digest hint associated with GBA. In a specific example, the valid PSK identity hints include the following: "3GPP-AKMA", which is associated with AKMA; and "3GPP-bootstrapping" "3GPP-bootstrapping-uicc", and/or "3GPP-bootstrapping-digest", which are associated with GBA. In some embodiments, the indication of the HPLMN is one of the following: an identifier (HNI) of the HPLMN, or a dummy security key identifier containing realm information associated with the HPLMN.

In some embodiments, these exemplary methods can also include: when both the UE and the HPLMN support same one or more of the authentication procedures, performing one of the same supported authentication procedures with the HPLMN; and when both the UE and the HPLMN do not support any same one of the authentication procedures, establishing a TLS connection with the server using at least one of a server-side TLS certificate and a client-side TLS certificate.

In some of these embodiments, the UE is pre-configured with an indication of which of the plurality of authentication procedures are supported by the HPLMN. Different variants of these embodiments are summarized below.

In some variants, the first message is a ClientHello message that includes the PSK identity hint that is supported by the UE and the UE's HPLMN and the one or more security key identifiers. The second message is a ServerKeyExchange that includes all valid PSK identity hints, and the ClientHello message is sent in response to the ServerKeyExchange message. In these variants, these exemplary methods also include sending a further ClientHello message to the server, with the ServerKeyExchange message being received in response to the further ClientHello message. In some of these variants, these exemplary methods can also include selecting the PSK identity hint that is supported by the UE and the UE's HPLMN, based on the valid PSK identity hints included in the ServerKeyExchange message and the preconfigured indication of which of the plurality of authentication procedures are supported by the HPLMN.

In other of these embodiments, these exemplary methods can also include, based on the second message, determining which of the plurality of authentication procedures are supported by the HPLMN. Different variants of these embodiments are summarized below.

In some variants, the first message is a ClientHello message that includes the indication of the HPLMN, and the second message is a ServerKeyExchange message that includes the PSK identity hint supported by the HPLMN, based on the indication of the HPLMN included in the ClientHello message. In some of these variants, the ClientHello message also includes a PSK identity hint that is supported by the UE.

In other variants, the first message is a ClientHello message that includes all valid PSK identity hints and the one or more security key identifiers, and the second message is a ServerHello message that includes the PSK identity hint supported by the HPLMN, based on the one or more security key identifiers included in the ClientHello message. In some of these variants, the ClientHello message includes an A-KID associated with AKMA procedure and one of the following:
- a valid B-TID associated with GBA procedure;
- a dummy B-TID constructed from HPLMN information included in A-KID; or
- a dummy identifier of the HPLMN constructed from HPLMN information included in A-KID.

In some of these variants, when the ClientHello message includes the dummy B-TID, the ServerHello message includes a request for the UE to run a new GBA procedure. The UE can run a new GBA procedure in response to the request.

In other variants, the first message is an HTTP request that includes all valid PSK identity hints and the indication of the HPLMN, and the second message is an HTTP response that includes the PSK identity hint supported by the HPLMN, based on the indication of the HPLMN included in the HTTP request.

In some embodiments, these exemplary methods can also include sending, to the server, a third message that includes the following: a security key identifier obtained based on an authentication procedure with the HPLMN, and a PSK identity hint supported by both the UE and the HPLMN.

Other embodiments include complementary methods (e.g., procedures) for a server (e.g., ECS, EES) in an edge data network (e.g., 5G network).

These exemplary methods can include a method for a server in an edge data network. The method comprises receiving, from a user equipment (UE) configured with a client for the edge data network, a first message that includes one of the following contents: at least one pre-shared key (PSK) identity hint that is supported by the UE and the UE's home public land mobile network (HPLMN), and one or more security key identifiers corresponding to respective one or more of a plurality of authentication procedures supported by at least the HPLMN; an indication of the UE's HPLMN; valid PSK identity hints, and the one or more security key identifiers; or valid PSK identity hints, and the indication of the HPLMN. The method may further comprise sending to the UE a second message that includes one of the following contents: valid PSK identity hints; or a PSK identity hint that is supported by at least the UE's HPLMN.

In some embodiments, the client is an EEC and the server is an ECS or an EES. In some embodiments, the plurality of authentication procedures can include GBA and AKMA. In some embodiments, the security identifiers include one or more of the following: a B-TID associated with GBA, and an A-KID associated with AKMA.

In some embodiments, the valid PSK identity hints include the following: : an 3GPP AKMA identity hint associated with AKMA; and a 3GPP bootstrapping identity hint, a 3GPP bootstrapping uicc hint and/or a 3GPP bootstrapping digest hint associated with GBA. In a specific example, the valid PSK identity hints include the following: "3GPP-AKMA", which is associated with AKMA; and "3GPP-bootstrapping" "3GPP-bootstrapping-uicc", and/or "3GPP-bootstrapping-digest", which are associated with GBA. In some embodiments, the indication of the HPLMN is one of the following: an identifier (HNI) of the HPLMN, or a dummy security key identifier containing realm information associated with the HPLMN.

In some embodiments, these exemplary methods can include, based on the first message, determining which of the plurality of authentication procedures are supported by the UE's HPLMN. Different variants of these embodiments are summarized below.

In some variants, the first message is a ClientHello message that includes the PSK identity hint that is supported by the UE and the UE's HPLMN and the one or more security key identifiers. The second message is a ServerKeyExchange that includes all valid PSK identity hints, and the ClientHello message is received in response to the ServerKeyExchange message. In these variants, these exemplary methods also include receiving a further ClientHello message from the UE, with the ServerKeyExchange message being sent in response to the further ClientHello message.

In other embodiments, the server is pre-configured with an indication of which of the plurality of authentication procedures are supported by the UE's HPLMN. Different variants of these embodiments are summarized below.

In some variants, the first message is a ClientHello message that includes the indication of the HPLMN, and the second message is a ServerKeyExchange message that includes the PSK identity hint supported by the HPLMN, based on the indication of the HPLMN included in the ClientHello message. In some of these variants, the ClientHello message also includes a PSK identity hint that is supported by the UE.

In other variants, the first message is a ClientHello message that includes all valid PSK identity hints and the one or more security key identifiers, and the second message is a ServerHello message that includes the PSK identity hint supported by the HPLMN, based on the one or more security key identifiers included in the ClientHello message. In some of these variants, the ClientHello message includes an A-KID associated with AKMA procedure and one of the following:
- a valid B-TID associated with GBA procedure;
- a dummy B-TID constructed from HPLMN information included in A-KID; or
- a dummy identifier of the HPLMN constructed from HPLMN information included in A-KID.

In some of these variants, these exemplary methods can also include extracting an identifier of the UE's HPLMN from the AKID. In some of these variants, when the ClientHello message includes the dummy B-TID, the ServerHello message includes a request for the UE to run a new GBA procedure. The UE can run a new GBA procedure in response to the request.

In other variants, the first message is an HTTP request that includes all valid PSK identity hints and the indication of the HPLMN, and the second message is an HTTP response that includes the PSK identity hint supported by the HPLMN, based on the indication of the HPLMN included in the HTTP request.

In some embodiments, these exemplary methods can also include receiving, from the UE, a third message that includes the following: a security key identifier obtained based on an authentication procedure with the HPLMN, and a PSK identity hint supported by both the UE and the HPLMN.

Other embodiments include UEs (or clients hosted thereby) and servers (or network nodes or computing systems hosting the same) that are configured to perform operations corresponding to any of the exemplary methods described herein. Other embodiments include non-transitory, computer-readable media storing computer-executable instructions that, when executed by processing circuitry, configure such UEs or servers to perform operations corresponding to any of the exemplary methods described herein.

These and other embodiments described herein can resolve issues of ambiguity and/or incompatibility for the authentication feature to be used by all nodes or functions involved in EC. This improves EEC access to relevant servers (e.g., EES, ECS) and more generally facilitates secure deployment of edge computing within 5G networks.

These and other objects, features, and advantages of the present disclosure will become apparent upon reading the following Detailed Description in view of the Drawings briefly described below.

### BRIEF DESCRIPTION OF THE DRAWINGS

Figures 1-2 illustrate various aspects of an exemplary 5G network architecture.
Figure 3 shows a diagram of an exemplary application-layer architecture supporting edge computing (EC) applications in a 5G network.
Figure 4 shows an exemplary method (e.g., procedure) for a UE configured with a client for an edge data network, according to various embodiments of the present disclosure.
Figure 5 shows an exemplary method (e.g., procedure) for a server for an edge data network, according to various embodiments of the present disclosure.
Figure 6 shows a communication system according to various embodiments of the present disclosure.
Figure 7 shows a UE according to various embodiments of the present disclosure.
Figure 8 shows a network node according to various embodiments of the present disclosure.
Figure 9 shows host computing system according to various embodiments of the present disclosure.
Figure 10 is a block diagram of a virtualization environment in which functions implemented by some embodiments of the present disclosure may be virtualized.
Figure 11 illustrates communication between a host computing system, a network node, and a UE via multiple connections, at least one of which is wireless, according to various embodiments of the present disclosure.

### DETAILED DESCRIPTION

Embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features, and advantages of the disclosed embodiments will be apparent from the following description.

Furthermore, the following terms are used throughout the description given below:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station *(e.g.,* a New Radio (NR) base station (gNB) in a 3GPP Fifth Generation (5G) NR network or an enhanced or evolved Node B (eNB) in a 3GPP LTE network), base station distributed components (*e.g.*, CU and DU), a high-power or macro base station, a low-power base station (*e.g*., micro, pico, femto, or home base station, or the like), an integrated access backhaul (IAB) node (or component thereof such as MT or DU), a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), etc. A core network node can also be a node that implements a particular core network function (NF), such as an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, mobile terminals (MTs), *etc.*

- Radio Node: As used herein, a "radio node" can be either a "radio access node" (or equivalent term) or a "wireless device."
- Network Node: As used herein, a "network node" is any node that is either part of the radio access network (*e.g.,* a radio access node or equivalent term) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.,* administration) in the cellular communications network.
- Node: As used herein, the term "node" (without any prefix) can be any type of node that is capable of operating in or with a wireless network (including a RAN and/or a core network), including a radio access node (or equivalent term), core network node, or wireless device.
- Service: As used herein, the term "service" refers generally to a set of data, associated with one or more applications, that is to be transferred via a network with certain specific delivery requirements that need to be fulfilled in order to make the applications successful.
- Component: As used herein, the term "component" refers generally to any component needed for the delivery of a service. Examples of component are RANs (*e.g.,* E-UTRAN, NG-RAN, or portions thereof such as eNBs, gNBs, base stations (BS), *etc*.), CNs (*e.g.,* EPC, 5GC, or portions thereof, including all type of links between RAN and CN entities), and cloud infrastructure with related resources such as computation, storage. In general, each component can have a "manager", which is an entity that can collect historical information about utilization of resources as well as provide information about the current and the predicted future availability of resources associated with that component (*e.g.,* a RAN manager).

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

As briefly mentioned above, current solutions for Edge Enabler Client (EEC) authentication - such as AKMA and transport layer security (TLS) - have various difficulties, issues, and/or drawbacks that make them unsuitable for use over interfaces between EEC and various servers (e.g., ECS and/or EES) in the proposed Edge network for the 5GS. This can create various problems, difficulties, and/or issues for deployment of EC solutions, which is discussed in more detail after the following description of 5G network and security architectures.

Figure 2 shows an exemplary non-roaming 5G reference architecture with service-based interfaces and various 3GPP-defined NFs within the Control Plane (CP). These include the following NFs, with additional details provided for those most relevant to the present disclosure:
- Application Function (AF, with Naf interface) interacts with the 5GC to provision information to the network operator and to subscribe to certain events happening in operator's network. An AF offers applications for which service is delivered in a different layer (i.e., transport layer) than the one in which the service has been requested (i.e., signaling layer), the control of flow resources according to what has been negotiated with the network. An AF communicates dynamic session information to PCF (via N5 interface), including description of media to be delivered by transport layer.
- Policy Control Function (PCF, with Npcf interface) supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.

- User Plane Function (UPF)- supports handling of user plane traffic based on the rules received from SMF, including packet inspection and different enforcement actions (e.g., event detection and reporting). UPFs communicate with the RAN (e.g., NG-RNA) via the N3 reference point, with SMFs (discussed below) via the N4 reference point, and with an external packet data network (PDN) via the N6 reference point. The N9 reference point is for communication between two UPFs.
   - Session Management Function (SMF, with Nsmf interface) interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
   - Charging Function (CHF, with Nchf interface) is responsible for converged online charging and offline charging functionalities. It provides quota management (for online charging), re-authorization triggers, rating conditions, etc. and is notified about usage reports from the SMF. Quota management involves granting a specific number of units (e.g., bytes, seconds) for a service. CHF also interacts with billing systems.
- Access and Mobility Management Function (AMF, with Namf interface) terminates the RAN CP interface and handles all mobility and connection management of UEs (similar to MME in EPC). AMFs communicate with UEs via the N1 reference point and with the RAN (e.g., NG-RAN) via the N2 reference point.
   - Network Exposure Function (NEF) with Nnef interface - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF) with Nnrf interface - provides service registration and discovery, enabling NFs to identify appropriate services available from other NFs.
   - Network Slice Selection Function (NSSF) with Nnssf interface - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Authentication Server Function (AUSF) with Nausf interface - based in a user's home network (HPLMN), it performs user authentication and computes security key materials for various purposes.
   - Location Management Function (LMF) with Nlmf interface - supports various functions related to determination of UE locations, including location determination for a UE and obtaining any of the following: DL location measurements or a location estimate from the UE; UL location measurements from the NG RAN; and non-UE associated assistance data from the NG RAN.
   - Unified Data Management (UDM) function with Nudm interface - supports generation of 3GPP authentication credentials, user identification handling, access authorization based on subscription data, and other subscriber-related functions. To provide this functionality, the UDM uses subscription data (including authentication data) stored in the 5GC unified data repository (UDR), which also supports storage and retrieval of policy data by the PCF, as well as storage and retrieval of application data by NEF.

Communication links between the UE and a 5G network (AN and CN) can be grouped in two different strata. The UE communicates with the CN over the Non-Access Stratum (NAS), and with the AN over the Access Stratum (AS). All the NAS communication takes place between the UE and the AMF via the NAS protocol (N1 interface in Figure 2). Security for the communications over this these strata is provided by the NAS protocol (for NAS) and the PDCP protocol (for AS).

The Generic Bootstrapping Architecture (GBA) was originally specified in Rel-15 and is further defined in 3GPP TS 33.220 (v17.1.0). GBA provides a mechanism to bootstrap authentication and key agreement for application security. The network and the UE derive the Ks key, the A, and the Ks_NAF key, with the latter being used to secure communication between the UE and a Network Application Function (NAF). When the UE wants to use this GBA, it constructs Ks_NAF and sends B-TID to the NAF, which can be located in or outside of the operator network. NAF requests Ks_NAF by sending the received B-TID to a bootstrapping function (BSF). After the authentication of the NAF by the network, the BSF provides Ks_NAF corresponding to the received B-TID. Thus, the shared key material Ks_NAF is available in UE and NAF to support the security of the communication between them.

The following authentication mechanisms are defined in 3GPP TS 33.220 (v. 17.1.0) section 5:
- Shared key-based authentication with certificate-based NAF authentication;
- Shared key-based mutual authentication between UE and NAF; and
- Certificate based mutual authentication between UE and NAF.

There are also the different GBA modes, denoted by the strings "3GPP-bootstrapping", "3GPP-bootstrapping-uicc" and "3GPP-bootstrapping-digest".

The negotiation for GBA modes in the "Shared key-based authentication with certificate-based NAF authentication" mechanism is done as follows. First, UE and NAF establish a transport layer security (TLS) connection using the NAF's TLS server certificate. The UE sends its supported GBA modes as part of an HTTP header in an HTTP(S) request to the NAF. The NAF selects one of the supported GBA modes and an indicates the selected GBA mode in the HTTP(S) response to the UE. These operations are further specified in section 5.3.0 in TS 33.222 (v17.1.0).

The negotiation for GBA modes in the "Shared key-based mutual authentication between UE and NAF" mechanism takes place in the TLS protocol and the steps depend on whether TLS version 1.2 or 1.3 is being used. 3GPP TS 33.222 (v17.1.0) section 5.4.0.1 specifies the negotiation steps for TLS 1.2. The UE sends a ClientHello message to the server (NAF), then the server indicates the supported GBA modes using a pre-shared key (PSK)-identity hint in the ServerKeyExchange message. The UE executes the GBA procedure and sends the selected GBA mode and B-TID to the server in the ClientKeyExchange message. The GBA negotiation mechanism for TLS 1.2 is also specified in 3GPP TS 24.109 (v17.0.0) section 5.3.3.1.

3GPP TS 33.222 (v17.1.0) section 5.4.0.1 specifies the negotiation steps for TLS 1.3. The UE sends a ClientHello message containing the supported GBA modes and the B-TID to the server, then the server (NAF) indicates the selected mode(s) in the ServerHello message.

3GPP Rel-16 introduced a new feature called authentication and key management for applications (AKMA) that is based on 3GPP user credentials in 5G, including the Internet of Things (IoT) use case. More specifically, AKMA leverages the user's AKA (Authentication and Key Agreement) credentials to bootstrap security between the UE and an application function (AF), which allows the UE to securely exchange data with an application server. The AKMA architecture is an evolution of GBA and is further specified in 3GPP TS 33.535 (v17.4.0).

In addition to the NEF, AUSF, and AF shown in Figure 2 and described above, Rel-16 AKMA also utilizes an anchor function for authentication and key management for applications (AAnF). This function is shown in Figure 2 with Naanf interface. In general, AAnF interacts with AUSFs and maintains UE AKMA contexts to be used for subsequent bootstrapping requests, e.g., by application functions. At a high level, AAnF is similar to the BSF defined for GBA.

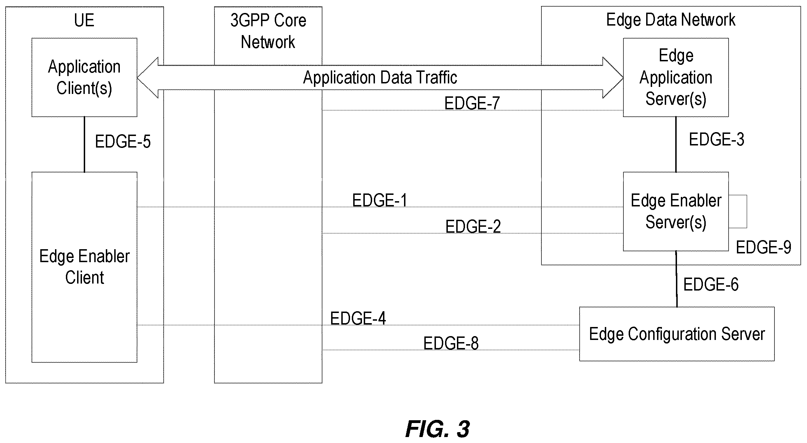

In general, security mechanisms for various 5GS protocols rely on multiple security keys. 3GPP TS 33.501 (v16.4.0) specifies these keys in an organized hierarchy shown in Figure 3. At the top is the long-term key part of the authentication credential and stored in the SIM card on the UE side and in the UDM/ARPF in the user's HPLMN.

A successful Primary Authentication run between the UE and the AUSF in the HPLMN leads to the establishment of K_{AUSF}, the second level key in the hierarchy. This key is not intended to leave the HPLMN and is used to secure the exchange of information between UE and HPLMN, such as for the provisioning of parameters to the UE from UDM in HPLMN. More precisely, K_{AUSF} is used for integrity protection of messages delivered from HPLMN to UE. As described in 3GPP TS 33.501 (v16.4.0), such new features include the Steering of Roaming (SoR) and the UDM parameter delivery procedures.

K_{AUSF} is used to derive another key, K_{SEAF}, that is sent to the serving PLMN. This key is then used by the serving PLMN to derive subsequent NAS and AS protection keys. These lower-level keys together with other security parameters (e.g., cryptographic algorithms, UE security capabilities, value of counters used for replay protection in various protocols, etc.) constitute the 5G security context as defined in 3GPP TS 33.501 (v16.4.0). However, K_{AUSF} is not part of the UE's 5G security context that resides in the UE's serving PLMN.

K_{AUSF} is also used the network and the UE to derive the K_{AKMA} key, an AKMA Key (K_{AKMA}) identifier (A-KID), and any AF keys (K_{AF}) used for communication security authentication or bootstrapping between the UE and respective AFs. A-KID identifies the root key (i.e., K_{AKMA}) used to derive K_{AF}, and includes A-TID (AKMA Temporary UE Identifier) and routing information for the UE's home network. More specifically, A-KID is in the NAI format specified in IETF RFC 7542 clause 2.2, i.e., username@realm. The username part includes the Routing Indicator (RID) and AKMA Temporary UE Identifier (A-TID), and the realm part includes Home Network Identifier. A-TID is derived from K_{AUSF}. For example, A-KID = "A-TID"."RID"@homenetworkrealm.

When the UE wants to use this feature with an AF, it constructs K_{AF} and A-KID and sends A-KID to the AF, which can be located within or outside of the operator network. The AF requests K_{AF} for the received A-KID from the AAnF via NEF when the AF is located outside the operator's network, or directly from AAnF when the AF is located inside the operator network. After authentication of the AF by the network, the AAnF sends K_{AF} corresponding to A-KID to the AF (directly or via NEF, as the case may be). With a recent enhancement in AKMA, the network also sends the user's Subscription Permanent Identifier (SUPI) to an AF inside the operator network, or the user's generic public subscription identifier (GPSI) to an AF outside the operator network. In this manner, the shared key material K_{AF} is available in UE and AF to support the security of the communication between them.

Like GBA, AKMA negotiation is done via HTTP if "Shared key-based UE authentication with certificate-based AF authentication" mechanism is used or via TLS protocol if "Shared key-based mutual authentication between UE and AF" mechanism is used. 3GPP TS 33.535 (v17.4.0) Annex B.1 describes these operations in more detail.

3GPP TR 33.839 (v17.0.0) discusses a study on security aspects of enhancement of support for Edge Computing (EC) in 5GC for 3GPP Rel-17. Key issues discussed in 3GPP TR 33.839 include authentication, authorization, and transport security solutions for interfaces between clients and servers and for interfaces between different servers in an Edge data network. These servers can include Edge Configuration Servers (ECS), Edge Enabler Servers (EES), and Edge Application Servers (EAS). Relevant clients include Edge Enabler Client (EEC), which can be regarded an application that runs on the UE and communicates with the ECS and EES.

3GPP TS 23.558 (v1.3.0) specifies the various client/server and server/server interfaces in the Rel-17 EC architecture. Figure 3 shows a diagram of an exemplary application-layer architecture supporting EC applications. In addition to the ECS, EES, EAS, and EEC mentioned above, Figure 3 also shows one or more application clients that run on the UE and communicate application data traffic with the EAS in the Edge Data Network. Additionally, Figure 3 shows the following client/server and server/server interfaces defined in 3GPP TS 23.558 (v1.3.0):
- EDGE-1: between EEC and EES.
- EDGE-2: between EES and CN (e.g., 5GC).
- EDGE-3: between EAS and EES.
- EDGE-4: between EEC and ECS.
- EDGE-5: between EEC and application client(s).
- EDGE-6: between ECS and EES.
- EDGE-7: between EAS and CN.
- EDGE-8: between ECS and CN.
- EDGE-9: between EES and EES.

The EES and the ECS can be considered as examples of an application server (AS), an application function (AF), or a network application function (NAF), with those terms being used alternately below to refer to EES and/or ECS. Such AFs can be deployed by a mobile network operator (MNO), an Edge Computing Service Provider (ECSP), or an Application Service Provider (ASP).

In the architecture shown in Figure 3, the EEC (on the UE) needs to authenticate itself towards to the EES/ECS. The EEC provides a UE identifier (ID) for this purpose, as specified in 3GPP TS 23.558 clause 7.2.6. Currently, the only supported UE ID is the generic public subscription identifier (GPSI), which can be used inside and outside of 5G networks as further specified in 3GPP TS 23.501 (v17.3.0) and 23.003 (v17.4.0).

3GPP TS 23.558 also specifies a new edge enabler layer that includes the UE's EEC. In this arrangement, the UE uses an EEC ID as the client identifier on the edge enabler layer. As such, the EEC uses two different identifiers towards EES: EEC ID and UE identifier (e.g., GPSI). In other words, EES/ECS may need to authenticate two different identifiers associated with the UE.

Some key issues discussed in 3GPP TR 33.839 include authentication and authorization of EEC towards ECS and EES. One conclusion in this TR is that both AKMA and GBA should be supported for authentication of EEC by the EES/ECS, and that there needs to be a negotiation mechanism for determining which option to use. This negotiation should involve EEC, EES, ECS, UE, and the UE's HPLMN.

According to 3GPP TS 23.558 (v1.3.0) section 8.3.2.1, some information about ECS can be provisioned by the MNO. In particular, ECS configuration information consists of one or more endpoint information (e.g., URI(s), FQDN(s), IP address(es)) of ECS(s), and optionally the corresponding ECS Provider Identifier. 3GPP TS 23.558 Table 8.3.2.1-1 describes the information elements of ECS configuration information, which can be
- pre-configured with the EEC;
- configured by an edge-aware application client (AC);
- configured by the user;
- provisioned by MNO through 5GC procedure if UE has the capability to deliver ECS configuration information to EEC on the UE (see 3GPP TS 23.548 (v. 17.1.0) section 6.5.2); or
- derived from HPLMN identifier for non-roaming scenario or from VPLMN identifier for roaming scenario.

It may be possible to provide the ECS configuration information to the EEC from the 5GC if the UE has the capability to deliver ECS configuration information to EEC on the UE. 3GPP TS 23.558 also explains that how the ECS configuration information is configured to the EEC by the AC, user, or pre-configuration is out of scope of the present specification.

One proposed negotiation mechanism is that the EEC is also provisioned with information about the feature type (i.e., GBA or AKMA) supported by ECS. Additionally, ECS sends information about the feature type supported by the EES to the EEC. Some other relevant solutions are described in various 3GPP documents:
- S3-220093: the network is configured with the ECS information (ECS ID and AKMA capability), the EEC retrieves this information from the network.
- S3-220094: the ECS is configured with the EES information (EES ID and AKMA capability), the EEC retrieves this information from the ECS.
- S3-220137: the UE sends supported solutions to the ECS, and ECS chooses one of them.
- S3-220148: EEC supports one solution (set by local configuration), ECS is configured with the support of solutions. For the EEC-EES authentication and authorization, a similar approach can be used with the addition that ECS finds EES's that support the same solution as the EEC.
- S3-220289: the 3GPP network provides ECS config information to the UE. EEC and ECS negotiate. If common solution is not supported then TLS certificates will be used.
- S3-220351 and S3-220352: negotiation mechanisms that currently exist in AKMA and GBA (explained above) should be used, and no additional negotiation steps are needed.

Applicants have recognized various problems, issues, and/or difficulties with existing negotiation mechanisms or solutions. For example, it is important that any negotiation mechanism considers the UE's HPLMN and whether the HPLMN supports AKMA, GBA, or both. An ECS or EES needs to support both solutions - or at least a solution supported by the HPLMN. The negotiation mechanisms that currently exist within the respective AKMA and GBA features are inadequate for EC because they do not consider the other feature (e.g., GBA for AKMA), the UE's HPLMN, and which of the features is supported by the HPLMN.

Embodiments of the present disclosure address these and other problems, issues, and/or difficulties by providing techniques for authentication feature (e.g., AKMA or GBA) selection for EEC authentication by ECS/EES. The nodes or functions involved may support one or more of the authentication features but a negotiation mechanism is used to select the supported feature to be used by the involved nodes during edge computing (EC) procedures. Different embodiments of the techniques address different options or assumptions about which involved node supports which authentication feature(s).

In this manner, embodiments resolve issues of ambiguity and/or incompatibility for the authentication feature to be used by all nodes or functions involved in EC. This improves EEC access to relevant servers (e.g., EES, ECS) and more generally facilitates secure deployment of edge computing within 5G networks.

Embodiments will not be described in more detail in the context of numbered (e.g., first, second, etc.) solutions. However, this numbering is used only to facilitate explanation and is not intended to imply any ordering or priority among the solutions.

Embodiments of the first solution are based on the following assumptions or conditions: 1) UE/EEC supports both AKMA and GBA, 2) HPLMN supports either AKMA or GBA, and 3) UE/EEC knows the feature supported by HPLMN. In the various embodiments of the first solution discussed below, the UE/EEC is preconfigured with the information indicating which feature (AKMA or GBA) is supported by the HPLMN, as a prerequisite or in an initial operation (also referred to as "operation 0"). The pre-configuration can be done by a non-3GPP-specific mechanism (e.g., by the user) or can be provisioned by the MNO that can be HPLMN or VPLMN through 5GC procedure if the UE has the capability to deliver the ECS configuration information to the UE's EEC (as further specified in 3GPP TS 23.548 (v. 17.1.0) section 6.5.2).

If the UE is not configured with information indicating which feature (AKMA or GBA) is supported by the HPLMN, it notifies the ECS or the HPLMN about the absence of this configuration. The MNO may then provision this information to the UE in response to this error notification.

In some embodiments of the first solution, the shared key-based mutual authentication between UE and NAF mechanism defined in 3GPP TS 33.220 (v17.1.0) section 5.4 is used with TLS 1.2. Further description of this usage scenario is given in 3GPP TS 33.220 (v17.1.0) section 5.4.0.1.

In operation 1, the UE/EEC sends a ClientHello message to the server (ECS/EES). In operation 2, the server sends a ServerHello and ServerKeyExchange message to the UE/EEC. In the ServerKeyExchange message, the server includes all possible PSK identity hints (i.e., "3GPP-AKMA", "3GPP-bootstrapping" "3GPP-bootstrapping-uicc", "3GPP-bootstrapping-digest").

In operation 3, the UE/EEC selects the PSK identity hint based on the feature supported by the HPLMN (preconfigured in operation 0) and sends the hint and A-KID (if AKMA is supported by HPLMN) or B-TID (if GBA is supported by HPLMN) to the server. If both GBA and AKMA are supported by the HPLMN, the UE could choose to send A-KID, B-TID, or both along with the hint. This choice could be based on user interaction or local configuration, for example. However, a prerequisite for sending a B-TID is that the UE performs a GBA authentication with BSF, which is necessary if a valid B-TID is not currently available in the UE.

If the UE is not configured with information indicating which feature (AKMA or GBA) is supported by the HPLMN, then it returns a relevant TLS error message. Upon receiving this TLS error message, the ECS may send an error message to notify the HPLMN that the UE is not configured properly. Alternatively, the UE can send a hint and the Home Network Indicator (HNI, i.e., ID of the UE's HPLMN). The HNI can be conveyed as a new IE within the TLS exchange or within a dummy A-KID or B-TID that contains the realm info of the HPLMN. Upon receiving this hint and the HNI, the ECS can determine the method to be used and send another ServerKeyExchange message including PSK identity hints that indicate feature support of the HPLMN.

In other embodiments of the first solution, the shared key-based mutual authentication between UE and NAF mechanism defined in 3GPP TS 33.220 (v17.1.0) section 5.4 is used with TLS 1.3. Further description of this usage scenario is given in 3GPP TS 33.220 (v17.1.0) section 5.4.02.

In operation 1, the UE/EEC sends ClientHello message to the server (ECS/EES), with the message including: 1) a PSK identity hint corresponding to the feature supported by UE and HPLMN (i.e., "3GPP-AKMA", "3GPP-bootstrapping", "3GPP-bootstrapping-uicc", or "3GPP-bootstrapping-digest"), and 2) A-KID (if AKMA is supported by the HPLMN) or B-TID (if GBA is supported by the HPLMN). If both GBA and AKMA are supported by the HPLMN, the UE could choose to send A-KID, B-TID, or both along with the hint. This choice could be based on user interaction or local configuration, for example.

If the UE is not configured with information indicating which feature (AKMA or GBA) is supported by the HPLMN, then it sends a ClientHello without the GBA/AKMA PSK identity hints. Upon receiving this TLS message without such hints, ECS determines that the UE is not configured with TLS or AKMA information and may decide to send an error message to the HPLMN to notify that the UE is not configured properly. Alternatively, the UE can send a hint and the Home Network Indicator (HNI, i.e., ID of the UE's HPLMN). The HNI can be conveyed as a new IE within the TLS exchange or within a dummy A-KID or B-TID that contains the realm info of the HPLMN. Upon receiving this hint and the HNI, the ECS may decide the method to be used and send another ServerKeyExchange message including PSK identity hints considering the support of the HPLMN.

Embodiments of the second solution are based on the following assumptions or conditions: 1) UE/EEC supports both AKMA and GBA, 2) HPLMN supports either AKMA or GBA, and 3) UE/EEC doesn't know which feature is supported by HPLMN. In the various embodiments of the second solution discussed below, the ECS/EEC is preconfigured with the information indicating which feature (AKMA or GBA) is supported by the HPLMN, as a prerequisite or in an initial operation (also referred to as "operation 0").

In some embodiments of the second solution, the shared key-based mutual authentication between UE and NAF mechanism defined in 3GPP TS 33.220 (v17.1.0) section 5.4 is used with TLS 1.2.

In operation 1, the UE/EEC sends the server (ECS/EES) a ClientHello message that includes the HNI. Alternatively, the UE can send a PSK identity hint and the HNI or a dummy A-KID or B-TID which contains the realm info of the HPLMN. In operation 2, the server sends ServerHello and ServerKeyExchange messages to the UE/EEC. In the ServerKeyExchange message, the server includes the PSK identity hints considering the support of the HPLMN (preconfigured and from operation 1), i.e., "3GPP-AKMA" for AKMA support or "3GPP-bootstrapping", "3GPP-bootstrapping-uicc", "3GPP-bootstrapping-digest" for GBA support. Based on this information, the UE/EEC can determine which feature is supported by the HPLMN.

Note that the UE can store the information about HPLMN support of GBA/AKMA to use in subsequent interactions between EEC and ECS/EES. This information may be valid for a limited time or a limited number of interactions. For example, the limit could be specified in a UE/EEC configuration. Limiting the time or number of interactions causes the UE to adapt its behavior to changes in HPLMN support of GBA/AKMA.

In operation 3, the UE/EEC runs AKMA or GBA procedures and sends the PSK hint and A-KID or B-TID in the ClientKeyExchange message to the server.

In other embodiments of the second solution, the shared key-based mutual authentication between UE and NAF mechanism defined in 3GPP TS 33.220 (v17.1.0) section 5.4 is used with TLS 1.3. In operation 1, the UE/EEC obtains A-KID. In operation 2, the UE/EEC sends ClientHello message including all possible PSK identity hints (i.e., "3GPP-AKMA", "3GPP-bootstrapping", "3GPP-bootstrapping-uicc" and "3GPP-bootstrapping-digest") and A-KID to the server.

In some variants, if the UE/EEC has a valid B-TID, then it may include this valid B-TID in the ClientHello message. On the other hand, if the UE/EEC does not have a valid B-TID, then it may construct an HNI or a dummy B-TID based on the HPLMN information in the A-KID and include this constructed (or dummy) parameter in the ClientHello message along with the A-KID. For example, a dummy B-TID could have the following format:
base64encode(FIXED_VALUE)@BSF_servers_domain_name,
where BSF-servers_domain_name is specified in 3GPP TS 33.220 (v17.1.0) section 4.5.2, FIXED_VALUE can be any arbitrary value (e.g., all zeros) to differentiate the dummy B-TID from a valid B-TID having the format base64encode(RAND)@BSF_servers_domain_name, where RAND is defined in 3GPP TS 33.220 (v17.1.0) section 4.5.2.

In operation 3, the server extracts the HNI from the A-KID or the B-TID (if included) and checks the pre-configured HPLMN support information. Then the server sends the ServerHello message including the appropriate PSK hint, i.e., "3GPP-AKMA" if HPLMN supports AKMA or "3GPP-bootstrapping", "3GPP-bootstrapping-uicc", "3GPP-bootstrapping-digest" if HPLMN supports GBA. If the PSK hint indicates GBA support and the ClientHello message includes a dummy B-TID, then the server requests the UE to run a new GBA bootstrapping procedure as specified in 3GPP TS 33.222 (v.17.1.0) section 5.4.0.2.

In operation 4, the UE/EEC executes the GBA bootstrapping procedure if the PSK hint from the server indicates GBA support in HPLMN. If the server does not include any AKMA- or GBA-related PSK hints, then the UE may choose a different type of PSK depending on its configuration.

Note that the UE/EEC can store the information about HPLMN support of GBA/AKMA to use in subsequent interactions between EEC and ECS/EES. This information may be valid for a limited time or a limited number of interactions. For example, the limit could be specified in a UE/EEC configuration. Limiting the time or number of interactions causes the UE to adapt its behavior to changes in HPLMN support of GBA/AKMA.

In other embodiments of the second solution, the shared key-based authentication with certificate-based NAF authentication mechanism defined in 3GPP TS 33.220 (v17.1.0) section 5.3 is used.

In operation 1, the UE/EEC and ECS/EES establish a TLS connection using a server-side TLS certificate. The UE/EEC sends all possible PSK hints ("3GPP-AKMA", "3GPP-bootstrapping", "3GPP-bootstrapping-uicc", "3GPP-bootstrapping-digest") and the HNI to the server (ECS/EES). In operation 2, the server indicates in the HTTP response the PSK identity hints corresponding to HPLMN feature support, i.e., "3GPP-AKMA" for AKMA support or "3GPP-bootstrapping", "3GPP-bootstrapping-uicc", "3GPP-bootstrapping-digest" for GBA support. In operation 3, the remaining operations in 3GPP TS 33.222 (v17.1.0) section 5.3 are executed.

Embodiments of the third solution are based on the following assumptions or conditions: 1) UE/EEC supports either AKMA or GBA, 2) HPLMN supports either AKMA or GBA, and 3) UE/EEC knows the feature supported by HPLMN. These embodiments are similar to the embodiments of the first solution discussed above, except that if there is a mismatch between the feature supported by the UE and the feature supported by the HPLMN, then UE and HPLMN establish a TLS connection using a server-side TLS certificate or using both server- and client-side TLS certificates.

Embodiments of the fourth solution are based on the following assumptions or conditions: 1) UE/EEC supports either AKMA or GBA, 2) HPLMN supports either AKMA or GBA, and 3) UE/EEC does not know the feature supported by HPLMN. These embodiments are similar to the embodiments of the second solution discussed above, except that if there is a mismatch between the feature supported by the UE and the feature supported by the HPLMN, then UE and HPLMN establish a TLS connection using a server-side TLS certificate or using both server- and client-side TLS certificates.

Embodiments of the fifth solution are based on the following assumptions or conditions: 1) UE/EEC supports both AKMA and GBA, and 2) HPLMN supports both AKMA and GBA. These embodiments are similar to the embodiments of the first and second solutions discussed above, except that one of the solutions is prioritized in the negotiation according to a configuration option on the UE or the ECS/EES.

Other variants of the above-described solutions are also possible. For example, the negotiations can also be done considering the support by the ECS/EES. If the ECS/EES supports only one feature (AKMA or GBA) then the ECS/EES forces the UE/EEC to use that feature. If there is no match between the support by the UE/EEC, the ECS/EES and the HPLMN then TLS with server certificate or TLS with server and client certificate is used.

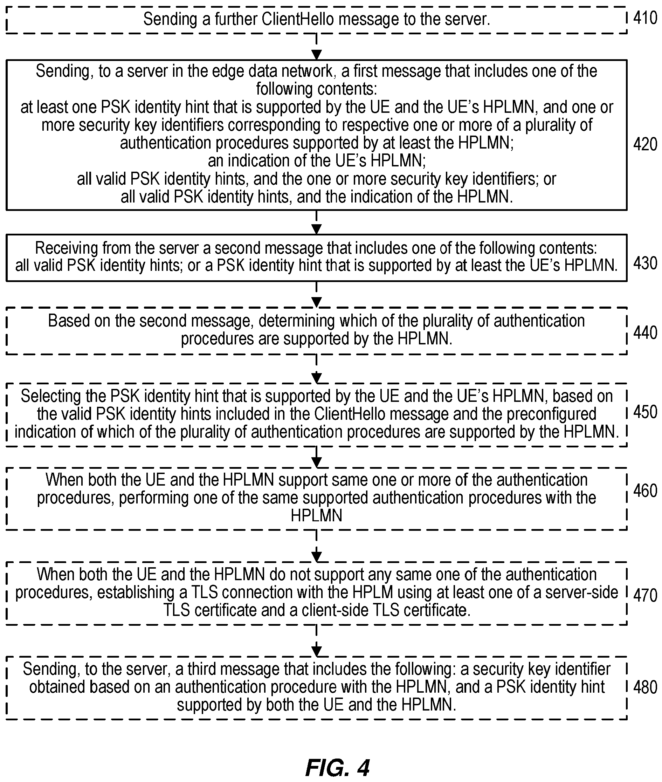

The embodiments described above can be further illustrated with reference to Figures 4-5, which depict exemplary methods (e.g., procedures) performed by a client and a server, respectively, in an edge data network. Put differently, various features of the operations described below correspond to various embodiments described above. The exemplary methods shown in Figures 4-5 can be complementary to each other such that they can be used cooperatively to provide benefits, advantages, and/or solutions to problems described herein. Although the exemplary methods are illustrated in Figures 4-5 by specific blocks in particular orders, the operations corresponding to the blocks can be performed in different orders than shown and can be combined and/or divided into operations having different functionality than shown. Optional blocks and/or operations are indicated by dashed lines.

More specifically, Figure 4 illustrates an exemplary method (e.g., procedure) for a UE configured with a client for an edge data network (e.g., 5G network), according to various embodiments of the present disclosure. The exemplary method shown in Figure 4 can be performed by a UE (e.g., wireless device) or a client hosted by the UE, such as an EEC described herein with reference to other figures.

The exemplary method can include the operations of block 420, where the UE can send, to a server in the edge data network, a first message that includes one of the following contents:
- at least one pre-shared key (PSK) identity hint that is supported by the UE and the UE's home public land mobile network (HPLMN), and one or more security key identifiers corresponding to respective one or more of a plurality of authentication procedures supported by at least the HPLMN;
- an indication of the UE's HPLMN;
- all valid PSK identity hints, and the one or more security key identifiers; or
- all valid PSK identity hints, and the indication of the HPLMN.

The exemplary method can also include the operations of block 430, where the UE can receive from the server a second message that includes one of the following contents: all valid PSK identity hints; or a PSK identity hint that is supported by at least the UE's HPLMN.

In some embodiments, the client is an Edge Enabler Client (EEC) and the server is an Edge Configuration Server (ECS) or an Edge Enabler Server (EES). In some embodiments, the plurality of authentication procedures can include the following: generic bootstrapping architecture (GBA), and authentication and key management for applications (AKMA). In some embodiments, the security identifiers include one or more of the following: a Bootstrapping Transaction Identifier (B-TID) associated with GBA, and an AKMA key identifier (A-KID) associated with AKMA.

In some embodiments, the valid PSK identity hints include the following: "3GPP-AKMA", which is associated with AKMA; and "3GPP-bootstrapping" "3GPP-bootstrapping-uicc", and "3GPP-bootstrapping-digest", which are associated with GBA. In some embodiments, the indication of the HPLMN is one of the following: an identifier (HNI) of the HPLMN, or a dummy security key identifier containing realm information associated with the HPLMN.

In some embodiments, the exemplary method can also include the operations of blocks 460-470, where the UE can, when both the UE and the HPLMN support same one or more of the authentication procedures, perform one of the same supported authentication procedures with the server and, when both the UE and the HPLMN do not support any same one of the authentication procedures, establish a TLS connection with the HPLM using at least one of a server-side TLS certificate and a client-side TLS certificate.

In some of these embodiments, the UE is pre-configured with an indication of which of the plurality of authentication procedures are supported by the HPLMN. Examples of these embodiments include the first and third solutions discussed above. Different variants of these solutions are described below.

In some variants, the first message is a ClientHello message that includes the PSK identity hint that is supported by the UE and the UE's HPLMN and the one or more security key identifiers. The second message is a ServerKeyExchange that includes all valid PSK identity hints, and the ClientHello message is sent (e.g., in block 420) in response to the ServerKeyExchange message (e.g., in block 430). In these variants, the exemplary method also includes the operations of block 410, where the UE can send a further ClientHello message to the server, with the ServerKeyExchange message being received (e.g., in block 430) in response to the further ClientHello message. In some of these variants, the exemplary method can also include the operations of block 450, where the UE can select the PSK identity hint that is supported by the UE and the UE's HPLMN, based on the valid PSK identity hints included in the ServerKeyExchange message and the preconfigured indication of which of the plurality of authentication procedures are supported by the HPLMN.

In other of these embodiments, the exemplary method can also include the operations of block 440, where based on the second message, the UE can determine which of the plurality of authentication procedures are supported by the HPLMN. Examples of these embodiments include the second and fourth solutions discussed above. Different variants of these solutions are described below.

In some variants, the first message is a ClientHello message that includes the indication of the HPLMN, and the second message is a ServerKeyExchange message that includes the PSK identity hint supported by the HPLMN, based on the indication of the HPLMN included in the ClientHello message. In some of these variants, the ClientHello message also includes a PSK identity hint that is supported by the UE.

In other variants, the first message is a ClientHello message that includes all valid PSK identity hints and the one or more security key identifiers, and the second message is a ServerHello message that includes the PSK identity hint supported by the HPLMN, based on the one or more security key identifiers included in the ClientHello message. In some of these variants, the ClientHello message includes an A-KID associated with AKMA procedure and one of the following:
- a valid B-TID associated with GBA procedure;
- a dummy B-TID constructed from HPLMN information included in A-KID; or
- a dummy identifier of the HPLMN constructed from HPLMN information included in A-KID.

In some of these variants, when the ClientHello message includes the dummy B-TID, the ServerHello message includes a request for the UE to run a new GBA procedure. The UE can run a new GBA procedure in response to the request.

In other variants, the first message is an HTTP request that includes all valid PSK identity hints and the indication of the HPLMN, and the second message is an HTTP response that includes the PSK identity hint supported by the HPLMN, based on the indication of the HPLMN included in the HTTP request.

In some embodiments, the exemplary method can also include the operations of block 480, where the UE can send, to the server, a third message that includes the following: a security key identifier obtained based on an authentication procedure with the HPLMN, and a PSK identity hint supported by both the UE and the HPLMN.

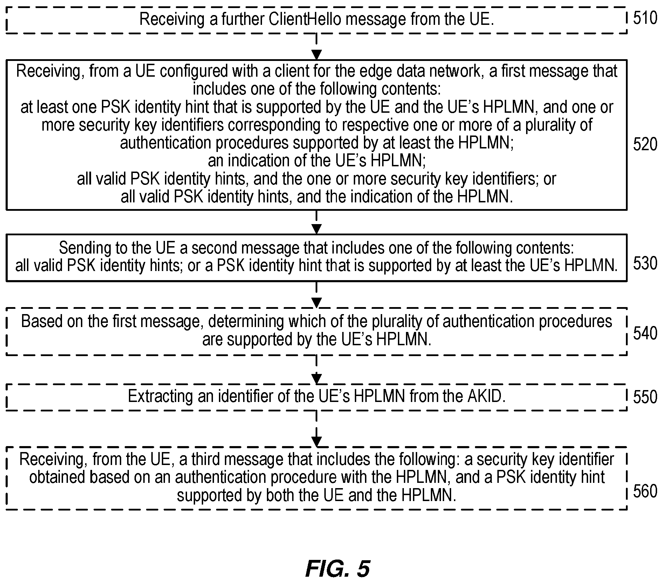

In addition, Figure 5 illustrates an exemplary method (*e.g.,* procedure) for a server in an edge data network (e.g., 5G network), according to various embodiments of the present disclosure. The exemplary method shown in Figure 5 can be performed by any appropriate server (e.g., EES, ECS, etc.) such as shown and/or described in relation to other figures herein.

The exemplary method can include the operations of block 520, where the server can receive, from a UE configured with a client for the edge data network, a first message that includes one of the following contents:
- at least one PSK identity hint that is supported by the UE and the UE's HPLMN, and one or more security key identifiers corresponding to respective one or more of a plurality of authentication procedures supported by at least the HPLMN;
- an indication of the UE's HPLMN;
- all valid PSK identity hints, and the one or more security key identifiers; or
- all valid PSK identity hints, and the indication of the HPLMN; and

The exemplary method can also include the operations of block 530, where the server can send to the UE a second message that includes one of the following contents: all valid PSK identity hints; or a PSK identity hint that is supported by at least the UE's HPLMN.

In some embodiments, the client is an EEC and the server is an ECS or an EES. In some embodiments, the plurality of authentication procedures can include GBA and AKMA. In some embodiments, the security identifiers include one or more of the following: a B-TID associated with GBA, and an A-KID associated with AKMA.

In some embodiments, the valid PSK identity hints include the following: "3GPP-AKMA", which is associated with AKMA; and "3GPP-bootstrapping" "3GPP-bootstrapping-uicc", and "3GPP-bootstrapping-digest", which are associated with GBA. In some embodiments, the indication of the HPLMN is one of the following: an identifier (HNI) of the HPLMN, or a dummy security key identifier containing realm information associated with the HPLMN.

In some embodiments, the exemplary method can include the operations of block 540, where the server can, based on the first message, determine which of the plurality of authentication procedures are supported by the UE's HPLMN. Examples of these embodiments include the first and third solutions discussed above. Different variants of these solutions are described below.

In some variants, the first message is a ClientHello message that includes the PSK identity hint that is supported by the UE and the UE's HPLMN and the one or more security key identifiers. The second message is a ServerKeyExchange that includes all valid PSK identity hints, and the ClientHello message is received (e.g., in block 520) in response to the ServerKeyExchange message (e.g., in block 530). In these variants, the exemplary method also includes the operations of block 510, where the server can receive a further ClientHello message from the UE, with the ServerKeyExchange message being sent (e.g., in block 530) in response to the further ClientHello message.

In other of these embodiments, the server is pre-configured with an indication of which of the plurality of authentication procedures are supported by the UE's HPLMN. Examples of these embodiments include the second and fourth solutions discussed above. Different variants of these solutions are described below.

In some variants, the first message is a ClientHello message that includes the indication of the HPLMN, and the second message is a ServerKeyExchange message that includes the PSK identity hint supported by the HPLMN, based on the indication of the HPLMN included in the ClientHello message. In some of these variants, the ClientHello message also includes a PSK identity hint that is supported by the UE.

In other variants, the first message is a ClientHello message that includes all valid PSK identity hints and the one or more security key identifiers, and the second message is a ServerHello message that includes the PSK identity hint supported by the HPLMN, based on the one or more security key identifiers included in the ClientHello message. In some of these variants, the ClientHello message includes an A-KID associated with AKMA procedure and one of the following:
- a valid B-TID associated with GBA procedure;
- a dummy B-TID constructed from HPLMN information included in A-KID; or
- a dummy identifier of the HPLMN constructed from HPLMN information included in A-KID.

In some of these variants, the exemplary method can also include the operations of block 550, where the server can extract an identifier of the UE's HPLMN from the AKID. In some of these variants, when the ClientHello message includes the dummy B-TID, the ServerHello message includes a request for the UE to run a new GBA procedure. The UE can run a new GBA procedure in response to the request.

In other variants, the first message is an HTTP request that includes all valid PSK identity hints and the indication of the HPLMN, and the second message is an HTTP response that includes the PSK identity hint supported by the HPLMN, based on the indication of the HPLMN included in the HTTP request.

In some embodiments, the exemplary method can also include the operations of block 560, where the server can receive, from the UE, a third message that includes the following: a security key identifier obtained based on an authentication procedure with the HPLMN, and a PSK identity hint supported by both the UE and the HPLMN.

Although various embodiments are described above in terms of methods, techniques, and/or procedures, the person of ordinary skill will readily comprehend that such methods, techniques, and/or procedures can be embodied by various combinations of hardware and software in various systems, communication devices, computing devices, control devices, apparatuses, non-transitory computer-readable media, computer program products, *etc.*

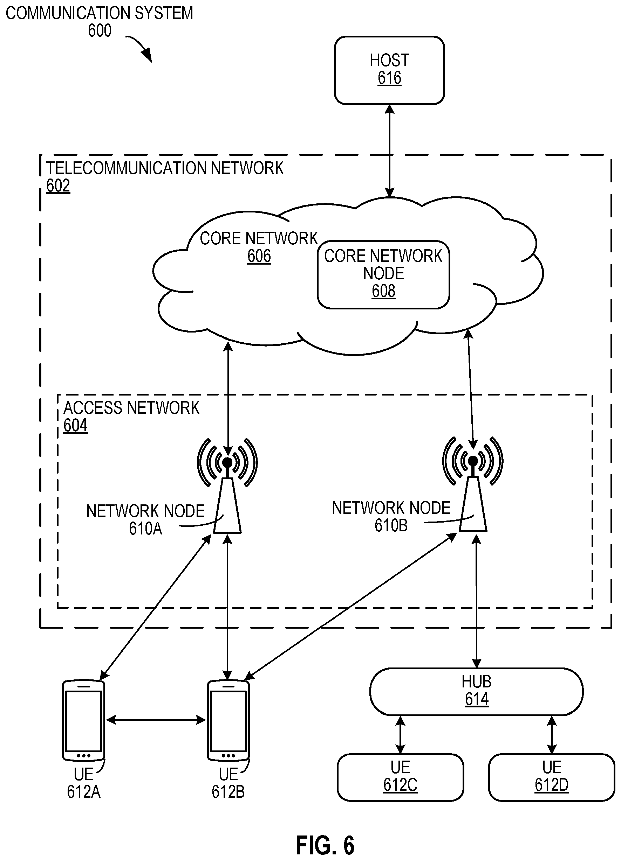

Figure 6 shows an example of a communication system 600 in accordance with some embodiments. In this example, the communication system 600 includes a telecommunication network 602 that includes an access network 604, such as a radio access network (RAN), and a core network 606, which includes one or more core network nodes 608. The access network 604 includes one or more access network nodes, such as network nodes 610a and 610b (one or more of which may be generally referred to as network nodes 610), or any other similar 3^{rd} Generation Partnership Project (3GPP) access node or non-3GPP access point. The network nodes 610 facilitate direct or indirect connection of user equipment (UE), such as by connecting UEs 612a, 612b, 612c, and 612d (one or more of which may be generally referred to as UEs 612) to the core network 606 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 600 may include any number of wired or wireless networks, network nodes, UEs, and/or any other components or systems that may facilitate or participate in the communication of data and/or signals whether via wired or wireless connections. The communication system 600 may include and/or interface with any type of communication, telecommunication, data, cellular, radio network, and/or other similar type of system.

The UEs 612 may be any of a wide variety of communication devices, including wireless devices arranged, configured, and/or operable to communicate wirelessly with the network nodes 610 and other communication devices. Similarly, the network nodes 610 are arranged, capable, configured, and/or operable to communicate directly or indirectly with the UEs 612 and/or with other network nodes or equipment in the telecommunication network 602 to enable and/or provide network access, such as wireless network access, and/or to perform other functions, such as administration in the telecommunication network 602.

In the depicted example, the core network 606 connects the network nodes 610 to one or more hosts, such as host 616. These connections may be direct or indirect via one or more intermediary networks or devices. In other examples, network nodes may be directly coupled to hosts. The core network 606 includes one more core network nodes (e.g., core network node 608) that are structured with hardware and software components. Features of these components may be substantially similar to those described with respect to the UEs, network nodes, and/or hosts, such that the descriptions thereof are generally applicable to the corresponding components of the core network node 608. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 616 may be under the ownership or control of a service provider other than an operator or provider of the access network 604 and/or the telecommunication network 602, and may be operated by the service provider or on behalf of the service provider. The host 616 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 600 of Figure 6 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 602 is a cellular network that implements 3GPP standardized features. Accordingly, the telecommunications network 602 may support network slicing to provide different logical networks to different devices that are connected to the telecommunication network 602. For example, the telecommunications network 602 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 612 are configured to transmit and/or receive information without direct human interaction. For instance, a UE may be designed to transmit information to the access network 604 on a predetermined schedule, when triggered by an internal or external event, or in response to requests from the access network 604. Additionally, a UE may be configured for operating in single- or multi-RAT or multi-standard mode. For example, a UE may operate with any one or combination of Wi-Fi, NR (New Radio) and LTE, i.e., being configured for multi-radio dual connectivity (MR-DC), such as E-UTRAN (Evolved-UMTS Terrestrial Radio Access Network) New Radio - Dual Connectivity (EN-DC).

In the example, the hub 614 communicates with the access network 604 to facilitate indirect communication between one or more UEs (e.g., UE 612c and/or 612d) and network nodes (e.g., network node 610b). In some examples, the hub 614 may be a controller, router, content source and analytics, or any of the other communication devices described herein regarding UEs. For example, the hub 614 may be a broadband router enabling access to the core network 606 for the UEs. As another example, the hub 614 may be a controller that sends commands or instructions to one or more actuators in the UEs. Commands or instructions may be received from the UEs, network nodes 610, or by executable code, script, process, or other instructions in the hub 614. As another example, the hub 614 may be a data collector that acts as temporary storage for UE data and, in some embodiments, may perform analysis or other processing of the data. As another example, the hub 614 may be a content source. For example, for a UE that is a VR headset, display, loudspeaker or other media delivery device, the hub 614 may retrieve VR assets, video, audio, or other media or data related to sensory information via a network node, which the hub 614 then provides to the UE either directly, after performing local processing, and/or after adding additional local content. In still another example, the hub 614 acts as a proxy server or orchestrator for the UEs, in particular in if one or more of the UEs are low energy IoT devices.

The hub 614 may have a constant/persistent or intermittent connection to the network node 610b. The hub 614 may also allow for a different communication scheme and/or schedule between the hub 614 and UEs (e.g., UE 612c and/or 612d), and between the hub 614 and the core network 606. In other examples, the hub 614 is connected to the core network 606 and/or one or more UEs via a wired connection. Moreover, the hub 614 may be configured to connect to an M2M service provider over the access network 604 and/or to another UE over a direct connection. In some scenarios, UEs may establish a wireless connection with the network nodes 610 while still connected via the hub 614 via a wired or wireless connection. In some embodiments, the hub 614 may be a dedicated hub - that is, a hub whose primary function is to route communications to/from the UEs from/to the network node 610b. In other embodiments, the hub 614 may be a nondedicated hub - that is, a device which is capable of operating to route communications between the UEs and network node 610b, but which is additionally capable of operating as a communication start and/or end point for certain data channels.

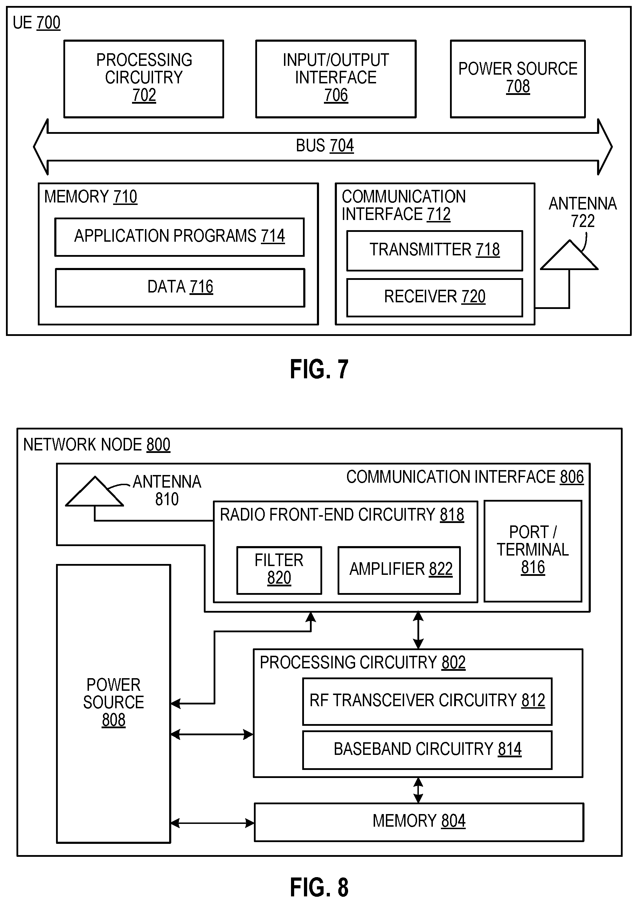

Figure 7 shows a UE 700 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 700 includes processing circuitry 702 that is operatively coupled via a bus 704 to an input/output interface 706, a power source 708, a memory 710, a communication interface 712, and/or any other component, or any combination thereof. Certain UEs may utilize all or a subset of the components shown in Figure 7. The level of integration between the components may vary from one UE to another UE. Further, certain UEs may contain multiple instances of a component, such as multiple processors, memories, transceivers, transmitters, receivers, etc.

The processing circuitry 702 is configured to process instructions and data and may be configured to implement any sequential state machine operative to execute instructions stored as machine-readable computer programs in the memory 710. The processing circuitry 702 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 702 may include multiple central processing units (CPUs).

In the example, the input/output interface 706 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 700. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 708 is structured as a battery or battery pack. Other types of power sources, such as an external power source (e.g., an electricity outlet), photovoltaic device, or power cell, may be used. The power source 708 may further include power circuitry for delivering power from the power source 708 itself, and/or an external power source, to the various parts of the UE 700 via input circuitry or an interface such as an electrical power cable. Delivering power may be, for example, for charging of the power source 708. Power circuitry may perform any formatting, converting, or other modification to the power from the power source 708 to make the power suitable for the respective components of the UE 700 to which power is supplied.

The memory 710 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 710 includes one or more application programs 714, such as an operating system, web browser application, a widget, gadget engine, or other application, and corresponding data 716. The memory 710 may store, for use by the UE 700, any of a variety of various operating systems or combinations of operating systems.

The memory 710 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 710 may allow the UE 700 to access instructions, application programs and the like, stored on transitory or non-transitory memory media, to off-load data, or to upload data. An article of manufacture, such as one utilizing a communication system may be tangibly embodied as or in the memory 710, which may be or comprise a device-readable storage medium.

The processing circuitry 702 may be configured to communicate with an access network or other network using the communication interface 712. The communication interface 712 may comprise one or more communication subsystems and may include or be communicatively coupled to an antenna 722. The communication interface 712 may include one or more transceivers used to communicate, such as by communicating with one or more remote transceivers of another device capable of wireless communication (e.g., another UE or a network node in an access network). Each transceiver may include a transmitter 718 and/or a receiver 720 appropriate to provide network communications (e.g., optical, electrical, frequency allocations, and so forth). Moreover, the transmitter 718 and receiver 720 may be coupled to one or more antennas (e.g., antenna 722) and may share circuit components, software or firmware, or alternatively be implemented separately.

In the illustrated embodiment, communication functions of the communication interface 712 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 712, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 700 shown in Figure 7.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 8 shows a network node 800 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 800 includes a processing circuitry 802, a memory 804, a communication interface 806, and a power source 808. The network node 800 may be composed of multiple physically separate components (e.g., a NodeB component and a RNC component, or a BTS component and a BSC component, etc.), which may each have their own respective components. In certain scenarios in which the network node 800 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 800 may be configured to support multiple radio access technologies (RATs). In such embodiments, some components may be duplicated (e.g., separate memory 804 for different RATs) and some components may be reused (e.g., a same antenna 810 may be shared by different RATs). The network node 800 may also include multiple sets of the various illustrated components for different wireless technologies integrated into network node 800, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 800.

The processing circuitry 802 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 800 components, such as the memory 804, to provide network node 800 functionality.

In some embodiments, the processing circuitry 802 includes a system on a chip (SOC). In some embodiments, the processing circuitry 802 includes one or more of radio frequency (RF) transceiver circuitry 812 and baseband processing circuitry 814. In some embodiments, the radio frequency (RF) transceiver circuitry 812 and the baseband processing circuitry 814 may be on separate chips (or sets of chips), boards, or units, such as radio units and digital units. In alternative embodiments, part or all of RF transceiver circuitry 812 and baseband processing circuitry 814 may be on the same chip or set of chips, boards, or units.

The memory 804 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 802. The memory 804 may store any suitable instructions, data, or information, including a computer program, software, an application including one or more of logic, rules, code, tables, and/or other instructions capable of being executed by the processing circuitry 802 and utilized by the network node 800. The memory 804 may be used to store any calculations made by the processing circuitry 802 and/or any data received via the communication interface 806. In some embodiments, the processing circuitry 802 and memory 804 is integrated.

The communication interface 806 is used in wired or wireless communication of signaling and/or data between a network node, access network, and/or UE. As illustrated, the communication interface 806 comprises port(s)/terminal(s) 816 to send and receive data, for example to and from a network over a wired connection. The communication interface 806 also includes radio front-end circuitry 818 that may be coupled to, or in certain embodiments a part of, the antenna 810. Radio front-end circuitry 818 comprises filters 820 and amplifiers 822. The radio front-end circuitry 818 may be connected to an antenna 810 and processing circuitry 802. The radio front-end circuitry may be configured to condition signals communicated between antenna 810 and processing circuitry 802. The radio front-end circuitry 818 may receive digital data that is to be sent out to other network nodes or UEs via a wireless connection. The radio front-end circuitry 818 may convert the digital data into a radio signal having the appropriate channel and bandwidth parameters using a combination of filters 820 and/or amplifiers 822. The radio signal may then be transmitted via the antenna 810. Similarly, when receiving data, the antenna 810 may collect radio signals which are then converted into digital data by the radio front-end circuitry 818. The digital data may be passed to the processing circuitry 802. In other embodiments, the communication interface may comprise different components and/or different combinations of components.

In certain alternative embodiments, the network node 800 does not include separate radio front-end circuitry 818, instead, the processing circuitry 802 includes radio front-end circuitry and is connected to the antenna 810. Similarly, in some embodiments, all or some of the RF transceiver circuitry 812 is part of the communication interface 806. In still other embodiments, the communication interface 806 includes one or more ports or terminals 816, the radio front-end circuitry 818, and the RF transceiver circuitry 812, as part of a radio unit (not shown), and the communication interface 806 communicates with the baseband processing circuitry 814, which is part of a digital unit (not shown).

The antenna 810 may include one or more antennas, or antenna arrays, configured to send and/or receive wireless signals. The antenna 810 may be coupled to the radio front-end circuitry 818 and may be any type of antenna capable of transmitting and receiving data and/or signals wirelessly. In certain embodiments, the antenna 810 is separate from the network node 800 and connectable to the network node 800 through an interface or port.

The antenna 810, communication interface 806, and/or the processing circuitry 802 may be configured to perform any receiving operations and/or certain obtaining operations described herein as being performed by the network node. Any information, data and/or signals may be received from a UE, another network node and/or any other network equipment. Similarly, the antenna 810, the communication interface 806, and/or the processing circuitry 802 may be configured to perform any transmitting operations described herein as being performed by the network node. Any information, data and/or signals may be transmitted to a UE, another network node and/or any other network equipment.

The power source 808 provides power to the various components of network node 800 in a form suitable for the respective components (e.g., at a voltage and current level needed for each respective component). The power source 808 may further comprise, or be coupled to, power management circuitry to supply the components of the network node 800 with power for performing the functionality described herein. For example, the network node 800 may be connectable to an external power source (e.g., the power grid, an electricity outlet) via an input circuitry or interface such as an electrical cable, whereby the external power source supplies power to power circuitry of the power source 808. As a further example, the power source 808 may comprise a source of power in the form of a battery or battery pack which is connected to, or integrated in, power circuitry. The battery may provide backup power should the external power source fail.

Embodiments of the network node 800 may include additional components beyond those shown in Figure 8 for providing certain aspects of the network node's functionality, including any of the functionality described herein and/or any functionality necessary to support the subject matter described herein. For example, the network node 800 may include user interface equipment to allow input of information into the network node 800 and to allow output of information from the network node 800. This may allow a user to perform diagnostic, maintenance, repair, and other administrative functions for the network node 800.

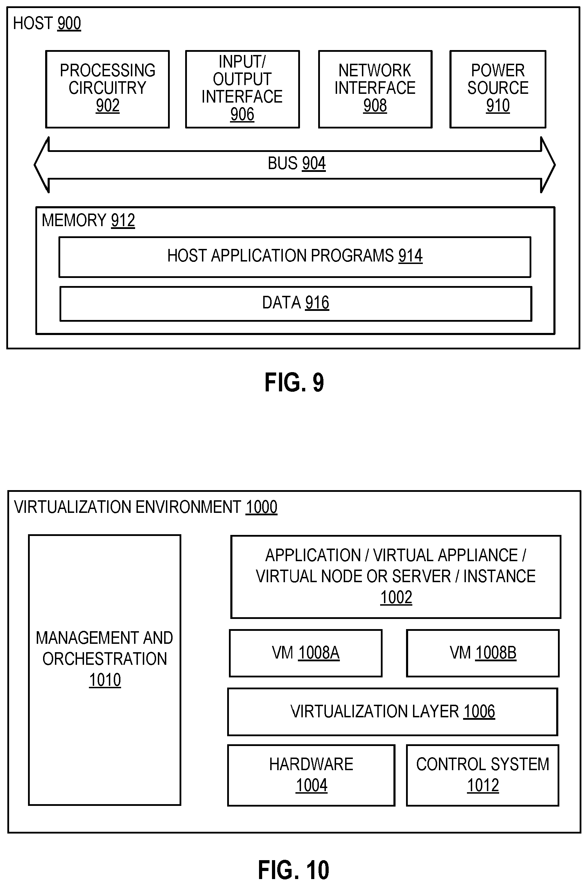

Figure 9 is a block diagram of a host 900, which may be an embodiment of the host 616 of Figure 6, in accordance with various aspects described herein. As used herein, the host 900 may be or comprise various combinations hardware and/or software, including a standalone server, a blade server, a cloud-implemented server, a distributed server, a virtual machine, container, or processing resources in a server farm. The host 900 may provide one or more services to one or more UEs.

The host 900 includes processing circuitry 902 that is operatively coupled via a bus 904 to an input/output interface 906, a network interface 908, a power source 910, and a memory 912. Other components may be included in other embodiments. Features of these components may be substantially similar to those described with respect to the devices of previous figures, such as Figures 7 and 8, such that the descriptions thereof are generally applicable to the corresponding components of host 900.

The memory 912 may include one or more computer programs including one or more host application programs 914 and data 916, which may include user data, e.g., data generated by a UE for the host 900 or data generated by the host 900 for a UE. Embodiments of the host 900 may utilize only a subset or all of the components shown. The host application programs 914 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 914 may also provide for user authentication and licensing checks and may periodically report health, routes, and content availability to a central node, such as a device in or on the edge of a core network. Accordingly, the host 900 may select and/or indicate a different host for over-the-top services for a UE. The host application programs 914 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 10 is a block diagram illustrating a virtualization environment 1000 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1000 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1002 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1004 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1006 (also referred to as hypervisors or virtual machine monitors (VMMs)), provide VMs 1008a and 1008b (one or more of which may be generally referred to as VMs 1008), and/or perform any of the functions, features and/or benefits described in relation with some embodiments described herein. The virtualization layer 1006 may present a virtual operating platform that appears like networking hardware to the VMs 1008.

The VMs 1008 comprise virtual processing, virtual memory, virtual networking or interface and virtual storage, and may be run by a corresponding virtualization layer 1006. Different embodiments of the instance of a virtual appliance 1002 may be implemented on one or more of VMs 1008, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1008 may be a software implementation of a physical machine that runs programs as if they were executing on a physical, non-virtualized machine. Each of the VMs 1008, and that part of hardware 1004 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1008 on top of the hardware 1004 and corresponds to the application 1002.

Hardware 1004 may be implemented in a standalone network node with generic or specific components. Hardware 1004 may implement some functions via virtualization. Alternatively, hardware 1004 may be part of a larger cluster of hardware (e.g., such as in a data center or CPE) where many hardware nodes work together and are managed via management and orchestration 1010, which, among others, oversees lifecycle management of applications 1002. In some embodiments, hardware 1004 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1012 which may alternatively be used for communication between hardware nodes and radio units.

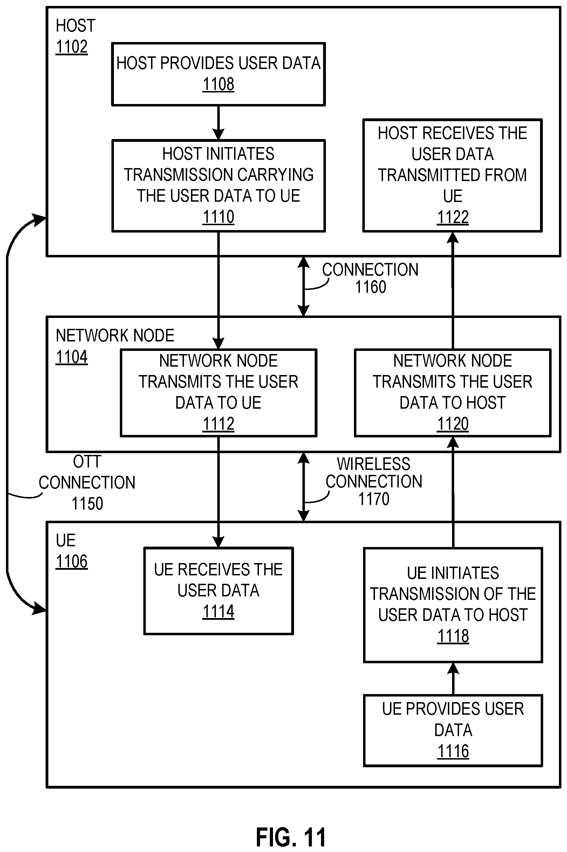

Figure 11 shows a communication diagram of a host 1102 communicating via a network node 1104 with a UE 1106 over a partially wireless connection in accordance with some embodiments. Example implementations, in accordance with various embodiments, of the UE (such as a UE 612a of Figure 6 and/or UE 700 of Figure 7), network node (such as network node 610a of Figure 6 and/or network node 800 of Figure 8), and host (such as host 616 of Figure 6 and/or host 900 of Figure 9) discussed in the preceding paragraphs will now be described with reference to Figure 11.

Like host 900, embodiments of host 1102 include hardware, such as a communication interface, processing circuitry, and memory. The host 1102 also includes software, which is stored in or accessible by the host 1102 and executable by the processing circuitry. The software includes a host application that may be operable to provide a service to a remote user, such as the UE 1106 connecting via an over-the-top (OTT) connection 1150 extending between the UE 1106 and host 1102. In providing the service to the remote user, a host application may provide user data which is transmitted using the OTT connection 1150.

The network node 1104 includes hardware enabling it to communicate with the host 1102 and UE 1106. The connection 1160 may be direct or pass through a core network (like core network 606 of Figure 6) and/or one or more other intermediate networks, such as one or more public, private, or hosted networks. For example, an intermediate network may be a backbone network or the Internet.

The UE 1106 includes hardware and software, which is stored in or accessible by UE 1106 and executable by the UE's processing circuitry. The software includes a client application, such as a web browser or operator-specific "app" that may be operable to provide a service to a human or non-human user via UE 1106 with the support of the host 1102. In the host 1102, an executing host application may communicate with the executing client application via the OTT connection 1150 terminating at the UE 1106 and host 1102. In providing the service to the user, the UE's client application may receive request data from the host's host application and provide user data in response to the request data. The OTT connection 1150 may transfer both the request data and the user data. The UE's client application may interact with the user to generate the user data that it provides to the host application through the OTT connection 1150.

The OTT connection 1150 may extend via a connection 1160 between the host 1102 and the network node 1104 and via a wireless connection 1170 between the network node 1104 and the UE 1106 to provide the connection between the host 1102 and the UE 1106. The connection 1160 and wireless connection 1170, over which the OTT connection 1150 may be provided, have been drawn abstractly to illustrate the communication between the host 1102 and the UE 1106 via the network node 1104, without explicit reference to any intermediary devices and the precise routing of messages via these devices.

As an example of transmitting data via the OTT connection 1150, in step 1108, the host 1102 provides user data, which may be performed by executing a host application. In some embodiments, the user data is associated with a particular human user interacting with the UE 1106. In other embodiments, the user data is associated with a UE 1106 that shares data with the host 1102 without explicit human interaction. In step 1110, the host 1102 initiates a transmission carrying the user data towards the UE 1106. The host 1102 may initiate the transmission responsive to a request transmitted by the UE 1106. The request may be caused by human interaction with the UE 1106 or by operation of the client application executing on the UE 1106. The transmission may pass via the network node 1104, in accordance with the teachings of the embodiments described throughout this disclosure. Accordingly, in step 1112, the network node 1104 transmits to the UE 1106 the user data that was carried in the transmission that the host 1102 initiated, in accordance with the teachings of the embodiments described throughout this disclosure. In step 1114, the UE 1106 receives the user data carried in the transmission, which may be performed by a client application executed on the UE 1106 associated with the host application executed by the host 1102.

In some examples, the UE 1106 executes a client application which provides user data to the host 1102. The user data may be provided in reaction or response to the data received from the host 1102. Accordingly, in step 1116, the UE 1106 may provide user data, which may be performed by executing the client application. In providing the user data, the client application may further consider user input received from the user via an input/output interface of the UE 1106. Regardless of the specific manner in which the user data was provided, the UE 1106 initiates, in step 1118, transmission of the user data towards the host 1102 via the network node 1104. In step 1120, in accordance with the teachings of the embodiments described throughout this disclosure, the network node 1104 receives user data from the UE 1106 and initiates transmission of the received user data towards the host 1102. In step 1122, the host 1102 receives the user data carried in the transmission initiated by the UE 1106.

One or more of the various embodiments improve the performance of OTT services provided to the UE 1106 using the OTT connection 1150, in which the wireless connection 1170 forms the last segment. More precisely, embodiments described herein can resolve issues of ambiguity and/or incompatibility for the authentication feature to be used by all nodes or functions involved in EC. This improves EEC access to relevant servers (e.g., EES, ECS) and more generally facilitates secure deployment of edge computing within 5G networks. In this manner, embodiments improve security for OTT services that rely on edge computing resources, thereby increasing the value of such OTT services to end users and service providers.

In an example scenario, factory status information may be collected and analyzed by the host 1102. As another example, the host 1102 may process audio and video data which may have been retrieved from a UE for use in creating maps. As another example, the host 1102 may collect and analyze real-time data to assist in controlling vehicle congestion (e.g., controlling traffic lights). As another example, the host 1102 may store surveillance video uploaded by a UE. As another example, the host 1102 may store or control access to media content such as video, audio, VR or AR which it can broadcast, multicast or unicast to UEs. As other examples, the host 1102 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

## Claims

1. A method performed by a user equipment, UE (612,700), configured with a client (714) for an edge data network, the method comprising:
sending (420), to a server in the edge data network, a first message that includes one of the following contents:
at least one pre-shared key, PSK, identity hint that is supported by the UE (612,700) and the UE's home public land mobile network, HPLMN, and one or more security key identifiers corresponding to respective one or more of a plurality of authentication procedures supported by at least the HPLMN;
an indication of the UE's HPLMN;
valid PSK identity hints, and the one or more security key identifiers; or
valid PSK identity hints, and the indication of the HPLMN; and
receiving (430) from the server a second message that includes one of the following contents:
valid PSK identity hints; or
a PSK identity hint that is supported by at least the UE's HPLMN.

2. The method of claim 1, wherein the plurality of authentication procedures includes generic bootstrapping architecture, GBA, and authentication and key management for applications, AKMA.

3. The method of claim 2, wherein the security identifiers include one or more of the following: a Bootstrapping Transaction Identifier, B-TID, associated with GBA, and an AKMA key identifier, A-KID, associated with AKMA; and/or
wherein the valid PSK identity hints include "3GPP-AKMA", which is associated with AKMA; and "3GPP-bootstrapping", "3GPP-bootstrapping-uicc", and "3GPP-bootstrapping-digest", which are associated with GBA.

4. The method of any of claims 1-3, wherein the indication of the HPLMN is one of the following: an identifier, HNI, of the HPLMN or a dummy security key identifier containing realm information associated with the HPLMN, and/or further comprising:
- when both the UE (612,700) and the HPLMN support same one or more of the authentication procedures, performing one of the same supported authentication procedures with the HPLMN; and
- when both the UE (612,700) and the HPLMN do not support any same one of the authentication procedures, establishing a transport layer security, TLS, connection with the server using at least one of a server-side TLS certificate and a client-side TLS certificate.

5. The method of any of claims 1-4, wherein the UE (612,700) is pre-configured with an indication of which of the plurality of authentication procedures are supported by the HPLMN; and, optionally, wherein:
- the first message is a ClientHello message that includes the PSK identity hint that is supported by the UE (612,700) and the UE's HPLMN and the one or more security key identifiers;
- the second message is a ServerKeyExchange that includes valid PSK identity hints;
- the ClientHello message is sent (420) in response to the ServerKeyExchange message; and/or
- the method further comprises sending a further ClientHello message to the server, with the ServerKeyExchange message being received (430) in response to the further ClientHello message.

6. The method of any of claims 5, further comprising selecting (450) the PSK identity hint that is supported by the UE (612,700) and the UE's HPLMN, based on the valid PSK identity hints included in the ServerKeyExchange message and the preconfigured indication of which of the plurality of authentication procedures are supported by the HPLMN.

7. The method of any of claims 1-4, further comprising, based on the second message, determining (440) which of the plurality of authentication procedures are supported by the HPLMN.

8. The method of claim 7, wherein the first message is a ClientHello message that includes the indication of the HPLMN, and wherein the second message is a ServerKeyExchange message that includes the PSK identity hint supported by the HPLMN, based on the indication of the HPLMN included in the ClientHello message;
optionally wherein the ClientHello message also includes a PSK identity hint that is supported by the UE (612,700).

9. The method of claim 7, wherein:
- the first message is a ClientHello message that includes all valid PSK identity hints and the one or more security key identifiers; and
- the second message is a ServerHello message that includes the PSK identity hint supported by the HPLMN, based on the one or more security key identifiers included in the ClientHello message.

10. The method of claim 9, wherein the ClientHello message includes an A-KID associated with a or the AKMA procedure and one of a valid B-TID associated with a or the GBA procedure; a dummy B-TID constructed from HPLMN information included in A-KID; or a dummy identifier of the HPLMN constructed from HPLMN information included in A-KID;
optionally wherein when the ClientHello message includes the dummy B-TID, the ServerHello message includes a request for the UE (612,700) to run a new GBA procedure, and optionally the UE (612,700) runs a new GBA procedure in response to the request.

11. The method of claim 7, wherein:
- the first message is an HTTP request that includes all valid PSK identity hints and the indication of the HPLMN; and
- the second message is an HTTP response that includes the PSK identity hint supported by the HPLMN, based on the indication of the HPLMN included in the HTTP request.

12. The method of any of claims 5-11, further comprising sending (480), to the server, a third message that includes a security key identifier obtained based on an authentication procedure with the HPLMN and a PSK identity hint supported by both the UE (612,700) and the HPLMN; and/or
wherein the client (714) is an Edge Enabler Client, EEC, and the server is an Edge Configuration Server, ECS, or an Edge Enabler Server, EES.

13. A method for a server in an edge data network, the method comprising:
receiving, from a user equipment, UE (612,700), configured with a client (714) for the edge data network, a first message that includes one of the following contents:
at least one pre-shared key, PSK, identity hint that is supported by the UE (612,700) and the UE's home public land mobile network, HPLMN, and one or more security key identifiers corresponding to respective one or more of a plurality of authentication procedures supported by at least the HPLMN;
an indication of the UE's HPLMN;
valid PSK identity hints, and the one or more security key identifiers; or
valid PSK identity hints, and the indication of the HPLMN; and
sending to the UE (612,700) a second message that includes one of the following contents:
valid PSK identity hints; or
a PSK identity hint that is supported by at least the UE's HPLMN.

14. The method of claim 13, further comprising any of the features recited in claims 2-12, applied *mutatis mutandis* to the method of claim 13.

15. A user equipment, UE (612,700), configured with a client (714) for an edge data network, the UE (612,700) being further configured to perform operations corresponding to any of the methods of claims 1-12.

16. A server for an edge data network, the server being configured to perform operations corresponding to any of the methods of claims 13-14.

17. A computer program product comprising computer-executable instructions that, when executed by processing circuitry, configure a device or node to perform any of the methods of claims 1-12 or 13-14, and optionally stored on a non-transitory, computer-readable medium.

## Patentansprüche

1. Verfahren, das durch eine Benutzerausrüstung UE (612, 700) durchgeführt wird, die mit einem Client (714) für ein Edge-Datennetzwerk konfiguriert ist, das Verfahren umfassend:
Senden (420) einer ersten Nachricht an einen Server im Edge-Datennetzwerk, die einen der folgenden Inhalte einschließt:
mindestens einen Identitätshinweis einer Pre-Shared Key, PSK, der durch die UE (612, 700) und das Home Public Land Mobile Network, HPLMN, der UE unterstützt wird, und eine oder mehrere Sicherheitsschlüsselkennungen, die jeweils einer oder mehreren von einer Vielzahl von Authentifizierungsprozeduren entsprechen, die durch mindestens das HPLMN unterstützt werden;
eine Angabe des HPLMN der UE;
gültige PSK-Identitätshinweise und die eine oder mehreren Sicherheitsschlüsselkennungen; oder
gültige PSK-Identitätshinweise und die Angabe des HPLMN; und
Empfangen (430) einer zweiten Nachricht vom Server, die einen der folgenden Inhalte einschließt:
gültige PSK-Identitätshinweise; oder
einen PSK-Identitätshinweis, der durch mindestens das HPLMN der UE unterstützt wird.

2. Verfahren nach Anspruch 1, wobei die Vielzahl von Authentifizierungsprozeduren eine generische Bootstrapping-Architektur, GBA, und eine Authentifizierungs- und Schlüsselverwaltung für Anwendungen, AKMA, einschließt.

3. Verfahren nach Anspruch 2, wobei die Sicherheitskennungen eines oder mehrere von Folgendem einschließen: eine Bootstrapping-Transaktionskennung, B-TID, die mit der GBA verknüpft ist, und eine AKMA-Schlüsselkennung, A-KID, die mit der AKMA verknüpft ist; und/oder
wobei die gültigen PSK-Identitätshinweise "3GPP-AKMA", die mit der AKMA verknüpft ist; und "3GPP-Bootstrapping", "3GPP-Bootstrapping-UICC" und "3GPP-Bootstrapping-Digest", die mit der GBA verknüpft sind, einschließen.

4. Verfahren nach einem der Ansprüche 1-3, wobei die Angabe des HPLMN eines von Folgendem ist: eine Kennung, HNI, des HPLMN oder eine Dummy-Sicherheitsschlüsselkennung, die mit dem HPLMN verknüpfte Bereichsinformationen enthält, und/oder weiter umfassend:
- wenn sowohl die UE (612, 700) als auch das HPLMN gleiche eine oder mehrere der Authentifizierungsprozeduren unterstützen, Durchführen einer der gleichen unterstützten Authentifizierungsprozeduren mit dem HPLMN; und
- wenn weder die UE (612, 700) noch das HPLMN beliebige gleiche eine oder mehrere der Authentifizierungsprozeduren unterstützen, Herstellen einer Transport Layer Security, TLS, Verbindung mit dem Server unter Verwendung mindestens eines von einem serverseitigen TLS-Zertifikat und/oder einem clientseitigen TLS-Zertifikat.

5. Verfahren nach einem der Ansprüche 1-4, wobei die UE (612, 700) mit einer Angabe vorkonfiguriert ist, welche von der Vielzahl von Authentifizierungsprozeduren durch das HPLMN unterstützt werden; und wahlweise, wobei:
- die erste Nachricht eine ClientHello-Nachricht ist, die den durch die UE (612, 700) und das HPLMN der UE unterstützten PSK-Identitätshinweis und die eine oder mehreren Sicherheitsschlüsselkennungen einschließt;
- die zweite Nachricht ein ServerKeyExchange ist, der gültige PSK-Identitätshinweise einschließt;
- die ClientHello-Nachricht als Reaktion auf die ServerKeyExchange-Nachricht gesendet (420) wird; und/oder
- das Verfahren weiter Senden einer weiteren ClientHello-Nachricht an den Server umfasst, wobei die ServerKeyExchange-Nachricht als Reaktion auf die weitere ClientHello-Nachricht (430) empfangen wird.

6. Verfahren nach einem der Ansprüche 5, weiter umfassend Auswählen (450) des PSK-Identitätshinweises, der durch die UE (612, 700) und das HPLMN der UE unterstützt wird, auf Grundlage der gültigen PSK-Identitätshinweise, die in der ServerKeyExchange-Nachricht eingeschlossen sind, und der vorkonfigurierten Angabe, welche von der Vielzahl von Authentifizierungsprozeduren durch das HPLMN unterstützt werden.

7. Verfahren nach einem der Ansprüche 1-4, weiter umfassend, auf Grundlage der zweiten Nachricht, Feststellen (440), welche von der Vielzahl von Authentifizierungsprozeduren durch das HPLMN unterstützt werden.

8. Verfahren nach Anspruch 7, wobei die erste Nachricht eine ClientHello-Nachricht ist, die die Angabe des HPLMN einschließt, und wobei die zweite Nachricht eine ServerKeyExchange-Nachricht ist, die den durch das HPLMN unterstützten PSK-Identitätshinweis einschließt, auf Grundlage der in der ClientHello-Nachricht eingeschlossenen Angabe des HPLMN;
wahlweise wobei die ClientHello-Nachricht auch einen PSK-Identitätshinweis einschließt, der durch die UE (612, 700) unterstützt wird.

9. Verfahren nach Anspruch 7, wobei:
- die erste Nachricht eine ClientHello-Nachricht ist, die alle gültigen PSK-Identitätshinweise und die eine oder mehreren Sicherheitsschlüsselkennungen einschließt; und
- die zweite Nachricht eine ServerHello-Nachricht ist, die den durch das HPLMN unterstützten PSK-Identitätshinweis einschließt, auf Grundlage der einen oder mehreren in der ClientHello-Nachricht enthaltenen Sicherheitsschlüsselkennungen.

10. Verfahren nach Anspruch 9, wobei die ClientHello-Nachricht eine A-KID, die mit einer oder der AKMA-Prozedur verknüpft ist, und eines von einer gültigen B-TID, die mit einer oder der GBA-Prozedur verknüpft ist; einer Dummy-B-TID, die aus in der A-KID eingeschlossenen HPLMN-Informationen erstellt wurde; oder einer Dummy-Kennung des HPLMN, die aus in der A-KID eingeschlossenen HPLMN-Informationen erstellt wurde, einschließt;
wahlweise wobei, wenn die ClientHello-Nachricht die Dummy-B-TID einschließt, die ServerHello-Nachricht eine Anfrage an die UE (612, 700) einschließt, eine neue GBA-Prozedur auszulösen, und wahlweise die UE (612,700) als Reaktion auf die Anfrage eine neue GBA-Prozedur auslöst.

11. Verfahren nach Anspruch 7, wobei:
- die erste Nachricht eine HTTP-Anfrage ist, die alle gültigen PSK-Identitätshinweise und die Angabe des HPLMN einschließt; und
- die zweite Nachricht eine HTTP-Antwort ist, die den durch das HPLMN unterstützten PSK-Identitätshinweis einschließt, auf Grundlage der in der HTTP-Anfrage enthaltenen Angabe des HPLMN.

12. Verfahren nach einem der Ansprüche 5-11, weiter umfassend Senden (480) einer dritten Nachricht an den Server, die eine auf Grundlage einer Authentifizierungsprozedur mit dem HPLMN erhaltenen Sicherheitsschlüsselkennung und einen von sowohl der UE (612, 700) als auch dem HPLMN unterstützten PSK-Identitätshinweis einschließt; und/oder
wobei der Client (714) ein Edge-Enabler-Client, EEC, ist und der Server ein Edge-Configuration-Server, ECS, oder ein Edge-Enabler-Server, EES, ist.

13. Verfahren für einen Server in einem Edge-Datennetzwerk, das Verfahren umfassend:
Empfangen, von einer Benutzerausrüstung, UE (612, 700), die mit einem Client (714) für das Edge-Datennetzwerk konfiguriert ist, einer ersten Nachricht, die einen der folgenden Inhalte einschließt:
mindestens einen Intentiätshinweis einer Pre-Shared Key, PSK, der durch die UE (612, 700) und das Home Public Land Mobile Network, HPLMN, der UE unterstützt wird, und eine oder mehrere Sicherheitsschlüsselkennungen, die jeweils einer oder mehreren von einer Vielzahl von Authentifizierungsprozeduren entsprechen, die durch mindestens das HPLMN unterstützt werden;
eine Angabe des HPLMN der UE;
gültige PSK-Identitätshinweise und die eine oder mehreren Sicherheitsschlüsselkennungen; oder
gültige PSK-Identitätshinweise und die Angabe des HPLMN; und
Senden einer zweiten Nachricht an die UE (612, 700), die einen der folgenden Inhalte einschließt:
gültige PSK-Identitätshinweise; oder
einen PSK-Identitätshinweis, der durch mindestens das HPLMN der UE unterstützt wird.

14. Verfahren nach Anspruch 13, weiter umfassend eines der in den Ansprüchen 2-12 genannten Merkmale, *mutatis mutandis* auf das Verfahren nach Anspruch 13 angewendet.

15. Benutzerausrüstung, UE (612, 700), konfiguriert mit einem Client (714) für ein Edge-Datennetzwerk, wobei die UE (612, 700) weiter konfiguriert ist, Operationen durchzuführen, die einem der Verfahren der Ansprüche 1-12 entsprechen.

16. Server für ein Edge-Datennetzwerk, wobei der Server konfiguriert ist, Operationen durchzuführen, die einem der Verfahren der Ansprüche 13-14 entsprechen.

17. Computerprogrammprodukt, das computerausführbare Anweisungen umfasst, die, wenn sie durch Verarbeitungsschaltung ausgeführt werden, eine Vorrichtung oder einen Knoten konfigurieren, eines der Verfahren der Ansprüche 1-12 oder 13-14 durchzuführen, und wahlweise auf einem nichtflüchtigen, computerlesbaren Medium gespeichert sind.

## Revendications

1. Procédé réalisé par un équipement d'utilisateur, UE (612, 700), configuré avec un client (714) pour un réseau de données de périphérie, le procédé comprenant :
l'envoi (420), à un serveur dans le réseau de données de périphérie, d'un premier message qui inclut l'un des contenus suivants :
au moins un indice d'identité de clé pré-partagée, PSK, qui est pris en charge par l'UE (612, 700) et le réseau mobile terrestre public d'origine, HPLMN, de l'UE et un ou plusieurs identifiants de clé de sécurité correspondant à une ou plusieurs respectives d'une pluralité de procédures d'authentification prises en charge par au moins le HPLMN ;
une indication du HPLMN de l'UE ;
des indices d'identité PSK valides, et les un ou plusieurs identifiants de clé de sécurité ; ou
des indices d'identité PSK valides, et l'indication du HPLMN ; et
la réception (430), à partir du serveur, d'un deuxième message qui inclut l'un des contenus suivants :
des indices d'identité PSK valides ; ou
un indice d'identité PSK qui est pris en charge par au moins le HPLMN de l'UE.

2. Procédé selon la revendication 1, dans lequel la pluralité de procédures d'authentification inclut une architecture d'amorçage générique, GBA, et une authentification et une gestion de clés pour les applications, AKMA.

3. Procédé selon la revendication 2, dans lequel les identifiants de sécurité incluent un ou plusieurs des éléments suivants : un identifiant de transaction d'amorçage, B-TID, associé à la GBA, et un identifiant de clé AKMA, A-KID, associé à l'AKMA ; et/ou
dans lequel les indices d'identité PSK valides incluent « 3GPP-AKMA », qui est associé à l'AKMA ; et « 3GPP-bootstrapping », « 3GPP-bootstrapping-uicc » et « 3GPP-bootstrapping-digest », qui sont associés à la GBA.

4. Procédé selon l'une quelconque des revendications 1-3, dans lequel l'indication du HPLMN est l'un des éléments suivants : un identifiant, HNI, du HPLMN ou un identifiant de clé de sécurité factice contenant des informations de domaine associées au HPLMN, et/ou comprenant en outre :
- lorsqu'à la fois l'UE (612, 700) et le HPLMN prennent en charge les mêmes une ou plusieurs des procédures d'authentification, la réalisation d'une des mêmes procédures d'authentification prises en charge avec le HPLMN ; et
- lorsqu'à la fois l'UE (612, 700) et le HPLMN ne prennent pas en charge une même procédure parmi les procédures d'authentification, l'établissement d'une connexion de sécurité de couche transport, TLS, avec le serveur en utilisant au moins un parmi un certificat TLS côté serveur et un certificat TLS côté client.

5. Procédé selon l'une quelconque des revendications 1-4, dans lequel l'UE (612, 700) est préconfiguré avec une indication desquelles parmi la pluralité de procédures d'authentification sont prises en charge par le HPLMN ; et, facultativement, dans lequel :
- le premier message est un message ClientHello qui inclut l'indice d'identité PSK qui est pris en charge par l'UE (612, 700) et le HPLMN de l'UE et les un ou plusieurs identifiants de clé de sécurité ;
- le deuxième message est un ServerKeyExchange qui inclut des indices d'identité PSK valides ;
- le message ClientHello est envoyé (420) en réponse au message ServerKeyExchange ; et/ou
- le procédé comprend en outre l'envoi d'un autre message ClientHello au serveur, le message ServerKeyExchange étant reçu (430) en réponse à l'autre message ClientHello.

6. Procédé selon la revendication 5, comprenant en outre la sélection (450) de l'indice d'identité PSK qui est pris en charge par l'UE (612, 700) et le HPLMN de l'UE, sur la base des indices d'identité PSK valides inclus dans le message ServerKeyExchange et de l'indication préconfigurée desquelles parmi la pluralité de procédures d'authentification sont prises en charge par le HPLMN.

7. Procédé selon l'une quelconque des revendications 1-4, comprenant en outre, sur la base du deuxième message, la détermination (440) desquelles parmi la pluralité de procédures d'authentification sont prises en charge par le HPLMN.

8. Procédé selon la revendication 7, dans lequel le premier message est un message ClientHello qui inclut l'indication du HPLMN, et dans lequel le deuxième message est un message ServerKeyExchange qui inclut l'indice d'identité PSK pris en charge par le HPLMN, sur la base de l'indication du HPLMN incluse dans le message ClientHello ;
facultativement dans lequel le message ClientHello inclut également un indice d'identité PSK qui est pris en charge par l'UE (612, 700).

9. Procédé selon la revendication 7, dans lequel :
- le premier message est un message ClientHello qui inclut tous les indices d'identité PSK valides et les un ou plusieurs identifiants de clé de sécurité ; et
- le deuxième message est un message ServerHello qui inclut l'indice d'identité PSK pris en charge par le HPLMN, sur la base des un ou plusieurs identifiants de clé de sécurité inclus dans le message ClientHello.

10. Procédé selon la revendication 9, dans lequel le message ClientHello inclut un A-KID associé à une ou la procédure AKMA et un parmi un B-TID valide associé à une ou la procédure GBA ; un B-TID factice construit à partir des informations HPLMN incluses dans l'A-KID ; ou un identifiant factice du HPLMN construit à partir des informations HPLMN incluses dans l'A-KID ;
facultativement dans lequel, lorsque le message ClientHello inclut le B-TID factice, le message ServerHello inclut une requête pour que l'UE (612, 700) exécute une nouvelle procédure GBA, et facultativement l'UE (612, 700) exécute une nouvelle procédure GBA en réponse à la requête.

11. Procédé selon la revendication 7, dans lequel :
- le premier message est une requête HTTP qui inclut tous les indices d'identité PSK valides et l'indication du HPLMN ; et
- le deuxième message est une réponse HTTP qui inclut l'indice d'identité PSK pris en charge par le HPLMN, sur la base de l'indication du HPLMN incluse dans la requête HTTP.

12. Procédé selon l'une quelconque des revendications 5-11, comprenant en outre l'envoi (480), au serveur, d'un troisième message qui inclut un identifiant de clé de sécurité obtenu sur la base d'une procédure d'authentification avec le HPLMN et un indice d'identité PSK pris en charge à la fois par l'UE (612, 700) et le HPLMN ; et/ou
dans lequel le client (714) est un client activateur de périphérie, EEC, et le serveur est un serveur de configuration de périphérie, ECS, ou un serveur activateur de périphérie, EES.

13. Procédé pour un serveur dans un réseau de données de périphérie, le procédé comprenant :
la réception, à partir d'un équipement d'utilisateur, UE (612, 700), configuré avec un client (714) pour le réseau de données de périphérie, d'un premier message qui inclut l'un des contenus suivants :
au moins un indice d'identité de clé pré-partagée, PSK, qui est pris en charge par l'UE (612, 700) et le réseau mobile terrestre public d'origine, HPLMN, de l'UE et un ou plusieurs identifiants de clé de sécurité correspondant à une ou plusieurs respectives d'une pluralité de procédures d'authentification prises en charge par au moins le HPLMN ;
une indication du HPLMN de l'UE ;
des indices d'identité PSK valides, et les un ou plusieurs identifiants de clé de sécurité ; ou
des indices d'identité PSK valides, et l'indication du HPLMN ; et
l'envoi à l'UE (612, 700) d'un deuxième message qui inclut l'un des contenus suivants :
des indices d'identité PSK valides ; ou
un indice d'identité PSK qui est pris en charge par au moins le HPLMN de l'UE.

14. Procédé selon la revendication 13, comprenant en outre l'une quelconque des caractéristiques énoncées dans les revendications 2-12, appliquées *mutatis mutandis* au procédé selon la revendication 13.

15. Équipement d'utilisateur, UE (612,700), configuré avec un client (714) pour un réseau de données de périphérie, l'UE (612, 700) étant en outre configuré pour réaliser des opérations correspondant à l'un quelconque des procédés selon les revendications 1-12.

16. Serveur pour un réseau de données de périphérie, le serveur étant configuré pour réaliser des opérations correspondant à l'un quelconque des procédés selon les revendications 13-14.

17. Produit de programme informatique comprenant des instructions exécutables par ordinateur qui, lorsqu'elles sont exécutées par des circuits de traitement, configurent un dispositif ou un nœud pour réaliser l'un quelconque des procédés selon les revendications 1-12 ou 13-14, et facultativement stockées sur un support non transitoire lisible sur ordinateur.
